Europäisches Patentamt

European Patent Office

Office européen des brevets

(11) Numéro de publication : **0 505 281 B1**

(12) **FASCICULE DE BREVET EUROPEEN**

(19)

(45) Date de publication du fascicule du brevet :
**19.07.95 Bulletin 95/29**

(21) Numéro de dépôt : **92400747.9**

(22) Date de dépôt : **20.03.92**

(51) Int. Cl.⁶ : **H04J 3/06,** H04B 10/20

(54) **Synchronisation de stations terminales dans un réseau arborescent à l'alternat et multidébit.**

(30) Priorité : **21.03.91 FR 9103457**

(43) Date de publication de la demande :
**23.09.92 Bulletin 92/39**

(45) Mention de la délivrance du brevet :
**19.07.95 Bulletin 95/29**

(84) Etats contractants désignés :
**DE GB IT**

(56) Documents cités :
**EP-A- 0 318 335**
**DE-A- 3 611 959**
**DE-A- 3 717 854**
**FR-A- 2 636 482**
**US-A- 4 411 007**
**US-A- 4 797 900**

(73) Titulaire : **FRANCE TELECOM**
**Exploitant Autonome de Droit Public,**
**6, Place d'Alleray**
**F-75015 Paris (FR)**

(72) Inventeur : **Bourgart, Fabrice**
**Croas An Ivillers,**
**Ploujean**
**F-29210 Morlaix (FR)**
Inventeur : **Abiven, Jacques**
**Coat Mael,**
**Vieux Marché**
**F-22420 Plouaret (FR)**

(74) Mandataire : **Martinet & Lapoux**
**BP 405**
**F-78055 St. Quentin en Yvelines Cédex (FR)**

# Description

La présente invention concerne la synchronisation de stations terminales reliées à une station centrale à travers un réseau numérique de communication arborescent. Les stations terminales sont à des distances différentes de la station principale. La synchronisation est effectuée principalement dans la station centrale afin que des secteurs ou paquets de données émis respectivement par des stations terminales en communication avec la station centrale ne se chevauchent pas temporellement et constituent par multiplexage temporel une trame retour à la réception dans la station centrale.

Pour accomplir une telle synchronisation, la station centrale évalue le temps de propagation à travers le réseau entre la station centrale et chacune des stations terminales, et en déduit un retard qui est transmis à et programmable dans la station terminale afin qu'un secteur de données émis par la station terminale soit introduit dans un intervalle de temps assigné prédéterminé de la trame retour.

La demande de brevet FR-A-2636482 divulgue un tel procédé de synchronisation pour un réseau de communication à l'alternat collectif monodébit. Le procédé de synchronisation relatif à une station terminale selon cette demande de brevet comprend :

- l'émission d'une trame aller incluant un ordre d'émission de mot de synchronisation par la station centrale à destination de la station terminale à synchroniser ayant un débit prédéterminé,
- déclenchement d'un comptage d'impulsions périodiques dans la station centrale lors de l'émission de la trame aller,
- transmission d'un mot de synchronisation par la station terminale vers la station centrale en réponse à la fin de la trame aller,
- l'arrêt du comptage d'impulsions en réponse à la détection du mot de synchronisation dans la station centrale afin d'établir un compte d'impulsions,
- le calcul d'un retard en fonction du compte d'impulsions, et
- la transmission dudit retard par la station centrale à la station terminale pour que celle-ci émette un secteur de données dans un intervalle de temps assigné de la trame retour.

Selon ce procédé, les impulsions périodiques sont celles d'un signal d'horloge au débit binaire des trames numériques échangées par les stations, et particulièrement au débit unique de fonctionnement des stations terminales.

Toutefois, l'exploitation d'un tel réseau montre que la synchronisation des stations terminales effectuée par rapport à l'unique signal d'horloge au débit des stations terminales confère des risques de chevauchement des secteurs de données dans la trame retour. En effet, les temps de propagation entre stations et donc les retards programmables sont évalués au temps bit près. Ces évaluations sont d'autant moins précises que le débit des stations terminales est élevé, et que le temps bit est voisin des temps de réponse des composants électroniques actuels et/ou de variations de temps de propagation dues à des dérives thermiques dans le réseau de transmission.

L'invention vise à assurer une synchronisation plus précise des stations terminales, quels que soient les débits faibles ou élevés des stations terminales, et quelles que soient les différences de débits entre stations terminales.

A cette fin, un procédé de synchronisation est tel que défini dans la revendication 1.

Selon des réalisations préférées, l'entier I est supérieur à deux, typiquement égal à huit.

Contrairement à la technique antérieure, la synchronisation d'une station terminale ne s'effectue plus au temps bit près, mais à une fraction de temps bit, et donc en fonction du débit de fonctionnement de la station terminale. Le compte d'impulsions est ainsi plus représentatif du temps de propagation entre la station centrale et la station terminale d'une part, et dépend du signal d'horloge milieu et donc du débit de la station terminale, d'autre part. Cette dernière caractéristique autorise la mise en oeuvre de la synchronisation pour des stations terminales fonctionnant avec des débits différents, et l'utilisation de signaux d'horloge milieu pour régénérer précisément les secteurs de trame retour respectivement.

De manière générale, la régénération d'un secteur de données émis par une station terminale comprend la réception de ce secteur dans la station centrale par rapport à un signal d'horloge milieu respectif afin de produire un secteur reçu, et la régénération du secteur reçu par rapport à un signal d'horloge de référence prédéterminé qui est utilisé pour la régénération de tous les secteurs de données dans une trame retour émis par les stations terminales.

Particulièrement, lorsque le débit d'une station terminale est élevé, typiquement supérieur à la dizaine de Mbit/s, et les temps de propagation sont soumis à des dérives thermiques pouvant engendrer des variations de l'ordre du temps bit entre deux synchronisations, le procédé comprend au moins une vérification cyclique de la synchronisation de la station terminale. La vérification consiste à déterminer un second signal d'horloge milieu, à évaluer le décalage entre un premier signal d'horloge milieu déterminé lors d'une vérification précédente et le second signal d'horloge milieu, à recevoir dans la station centrale tout secteur de données émis par la station terminale par rapport au second signal d'horloge milieu, et à régénérer les bits du secteur de données reçu en fonction du décalage évalué et par rapport à un signal d'horloge de référence prédéterminé qui est utilisé pour une régénération de tous les secteurs de données dans une trame retour émis par les stations terminales.

L'invention concerne également un dispositif de synchronisation pour station terminale ayant un débit donné, inclus dans la station centrale, pour la mise en oeuvre de la synchronisation selon l'invention. Ce dispositif comprend :

- des moyens pour produire au moins I signaux d'horloge audit débit prédéterminé de la station terminale et déphasés entre eux de TB/I respectivement pendant I périodes de trame successives, où TB est le temps bit des bits émis par la station terminale et I un nombre entier,
- des moyens de comparaison pour détecter des mots de synchronisation émis par la station terminale par rapport aux signaux d'horloge pendant les I périodes de trame respectivement,
- des moyens pour mémoriser les indices des signaux d'horloge ayant causé une égalité de mots dans les moyens de comparaison,
- des moyens pour calculer un indice en fonction des indices mémorisés afin de produire un signal d'horloge milieu ($HF_m$) correspondant audit indice calculé et destiné à la régénération de bits émis par la station terminale après la synchronisation,
- des moyens pour compter des impulsions du signal d'horloge milieu entre l'émission d'une trame aller par la station centrale et la détection d'un mot de synchronisation par rapport audit signal d'horloge milieu pendant une période de trame succédant aux I périodes de trame afin d'établir un compte d'impulsions, et
- des moyens pour calculer ledit retard en fonction du compte d'impulsions.

Le dispositif de synchronisation comprend en outre des moyens pour recevoir tout bit de secteur de données émis par la station terminale au rythme dudit signal d'horloge milieu, et des moyens pour régénérer chaque bit reçu par la station centrale par rapport à un même signal d'horloge de référence quelle que soit la station terminale.

D'autres avantages de l'invention apparaîtront plus clairement à la lecture de la description suivante de réalisations préférées des procédé et dispositif selon l'invention en référence aux dessins annexés correspondants dans lesquels :

- la Fig. 1 montre schématiquement l'architecture connue d'un réseau de communication arborescent à l'alternat et multidébit pour la mise en oeuvre du procédé de synchronisation selon l'invention ;
- la Fig. 2 montre une trame aller et une trame retour dans une période de trame à l'alternat;
- la Fig. 3 montre la structure d'une trame aller analogue à celle d'une trame retour ;
- la Fig. 4 montre un secteur de gestion dans une trame aller ;

- la Fig. 5 est un algorithme des étapes et sousétapes de la synchronisation d'une station terminale selon l'invention;
- la Fig. 6 est un chronogramme relatif à la transmission de trames aller et de mots de synchronisation pour la synchronisation d'une station terminale, les temps étant exprimés en nombres de bits à un débit faible;
- la Fig. 7 est un diagramme temporel relatif à un bit reçu en station centrale et à des signaux d'horloge;
- la Fig. 8 est un bloc-diagramme schématique d'une station centrale selon l'invention;
- les Figs. 9F et 9E sont des blocs-diagrammes détaillés de circuits de synchronisation inclus dans la station centrale pour stations terminales à débit faible et débit élevé, respectivement ;
- les Figs. 10, 11 et 12 sont des diagrammes temporels de bits reçus dans la station centrale et de signaux d'horloge pour régénérer des bits reçus à débit élevé, respectivement pour trois ensembles de signaux d'horloge milieu sélectionnés en fonction de l'indice d'un signal d'horloge milieu établi lors d'une vérification de synchronisation d'une station terminale; et
- la Fig. 13 est un bloc-diagramme détaillé d'un circuit de régénération de trame retour inclus dans la station centrale.

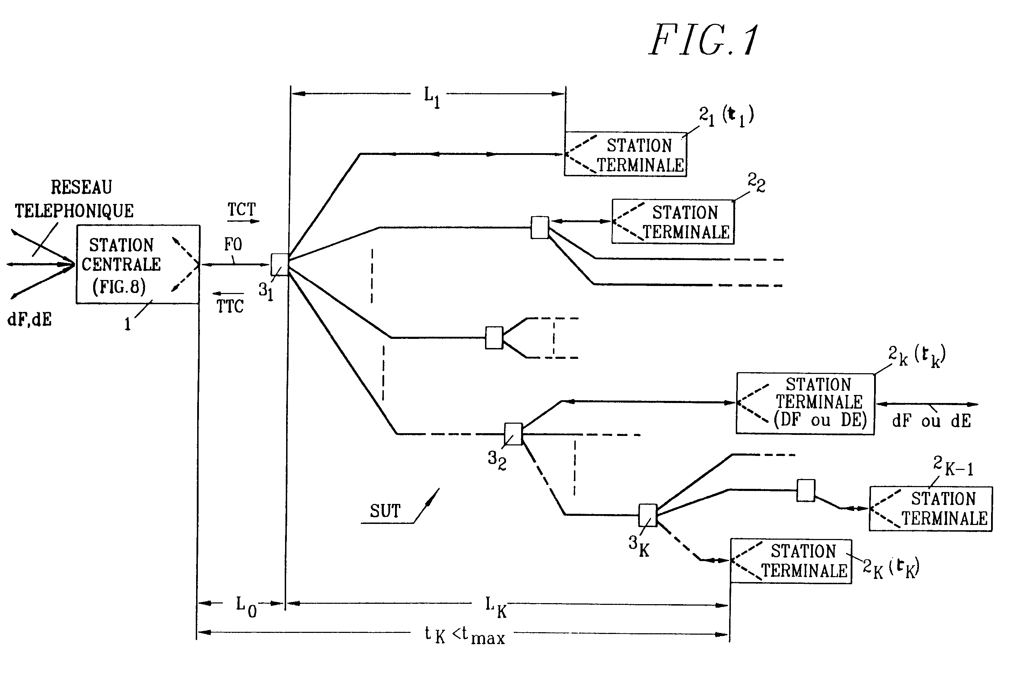

La description détaillée ci-après se réfère, à titre de réalisation préférée, à un réseau de communication multidébit à l'alternat ayant un support de transmission arborescent SUT, par exemple à fibre optique, comme montré à la Fig.1. La transmission à l'alternat dans le réseau est en mode dit à l'alternat collectif et à accès multiple à répartition dans le temps (AMRT). Le réseau comprend une station centrale 1 et une pluralité K de stations terminales d'abonné $2_1$ à $2_K$.

L'entier K est choisi en fonction du nombre N de secteurs de canal numérique dans une trame multidébit et du nombre de débits différents correspondant aux stations terminales, comme on le verra dans la suite.

Afin de fixer les idées, des valeurs numériques de paramètres, tels que nombres de secteurs, durées, débits, fréquences et nombres de bits, relatifs notamment à une trame multidébit sont indiqués ciaprès. Ainsi, le nombre de secteurs N est choisi égal à 8, et les débits différents sont au nombre de deux et sont désignés par un débit en ligne faible DF = 4,096 Mbit/s et un débit en ligne élévé DE = 49,152 Mbit/s.

La station centrale 1 fait office d'un autocommutateur téléphonique desservant plusieurs réseaux arborescents, tels que celui montré à la Fig.1. La station centrale est reliée à N canaux numériques bidirectionnels ayant un débit primaire faible de dF = 160 kbit/s qui est inférieur au débit en ligne faible DF, et à N canaux numériques bidirectionnels ayant un débit primaire élévé de dE = 2,048 Mbit/s qui est inférieur au débit en ligne élévé DE. Les 2N canaux bidirectionnels sont reliés au réseau commuté général téléphonique. En fonction des demandes de communication d'arrivée ou de départ émanant du réseau téléphonique commuté général ou des stations terminales, la station centrale attribue des secteurs de trame aux stations terminales en communication. La station centrale multiplexe avec augmentations de débit respectives les canaux en secteurs de trame aller et démultiplexe avec diminutions de débit respectives des secteurs de trame retour en canaux numériques. Les opérations particulières de multiplexage et démultiplexage n'appartiennent pas au cadre de l'invention . On pourra se reporter à ce sujet à la demande de brevet français N° 90-13923 (FR-A-2669168 publiée 15/05/92) déposée le 9 novembre 1990 et intitulée "Procédé de multiplexage-démultiplexage numérique multidébit".

L'invention a trait particulièrement aux fonctions de gestion et synchronisation de trame effectuées principalement dans la station centrale du côté du support arborescent SUT, en aval de moyens de multiplexage multidébit suivant le sens aller de trames TCT émises par la station centrale, et en amont de moyens de démultiplexage multidébit suivant le sens retour de trames TTC reçues par la station centrale. Les sens aller et retour sont également appelés sens "descendant" et "montant".

Chaque station terminale est compatible avec un débit en ligne prédéterminé DF ou DE, afin de desservir une installation téléphonique, tel qu'un réseau local, au débit correspondant plus faible dF ou dE.

Le réseau de communication reliant la station centrale 1 aux stations terminales $2_1$ à $2_K$ est composé d'un arbre dont le tronc part de la station centrale et dont les branches s'épanouissent au niveau de coupleurs optiques bidirectionnels 3 ayant un accès commun orienté vers la station centrale et plusieurs accès secondaires orientés vers les stations terminales.

Comme montré schématiquement dans la Fig.1, les stations terminales $2_1$ à $2_K$ sont localisées à des distances différentes par rapport à la station centrale. Dans cette figure, un premier coupleur $3_1$ est localisé à une distance $L_O$ de la station centrale 1 le long d'une fibre optique de tronc d'arbre FO, et est relié via des accès secondaires respectifs notamment à une première station terminale $2_1$ par une longueur de fibre optique $L_1$, et à une station terminale $2_K$ par une longueur de fibre optique $L_K$ à travers au moins deux coupleurs $3_2$ à $3_K$. Les autres accès des coupleurs $3_2$ et $3_K$ desservent d'autres stations terminales en l'occurrence des stations terminales $2_k$ à $2_{K-1}$, où k est entier compris entre 1 et K. Ainsi, la station terminale $2_1$ est reliée à la station centrale par une longueur de fibre optique $L_O + L_1$ et un seul coupleur $3_1$, tandis que la station terminale $2_K$ est reliée à la station centrale à travers une longueur de fibre optique $L_O + L_K$ à travers au moins trois coupleurs $3_1$, $3_2$, et $3_K$. Cette disparité dans les distances entre station centrale et stations terminales introduit dans les signaux échangés non seulement des temps de retard de propagation différents mais également des atténuations de signaux différentes.

Les moyens pour rémédier à la disparité dans les atténuations de signaux n'appartiennent pas au cadre de la présente invention, et le lecteur se reportera à ce sujet à la EP-A-465300 déposée le 26 juin 1991, publiée le 8 janvier 1992, et intitulée "Procédé de règlage de niveau d'émission de terminaux dans un réseau de transmission à l'alternat".

Si on désigne par $t_k$ le temps de retard de propagation entre la station centrale 1 et une station terminale quelconque $2_k$, où k est un entier compris entre 1 et K, et si la distance $L_O + L_k$ entre ces stations est comprise entre 0 et 10 km environ, les temps de retard de propagation $t_1$ à $t_K$ relatifs aux stations $2_1$ à $2_K$ sont inférieurs à 33 μs, soit inférieurs à un temps de retard maximum approximatif de $t_{max} = 50$ μs. Comme indiqué dans la FR-A-2636482, les différents secteurs d'une trame retour TTC doivent être transmis par les stations terminales en communication avec la station centrale à des instants précis pour éviter tout chevauchement des secteurs lors de la constitution progressive de la trame TTC au niveau des coupleurs $3_1$ à $3_K$, et en particulier à la réception dans la station centrale 1. Lesdits instants précis dépendent directement des différents temps de retard de propagation respectivement et sont repérés par rapport à un instant de référence imposé par la station centrale qui joue le rôle de station maître vis-à-vis des stations terminales esclaves. L'instant de référence correspond au début de la transmission de la trame aller TCT par la station centrale et au début d'une période de trame PT de la transmission à l'alternat.

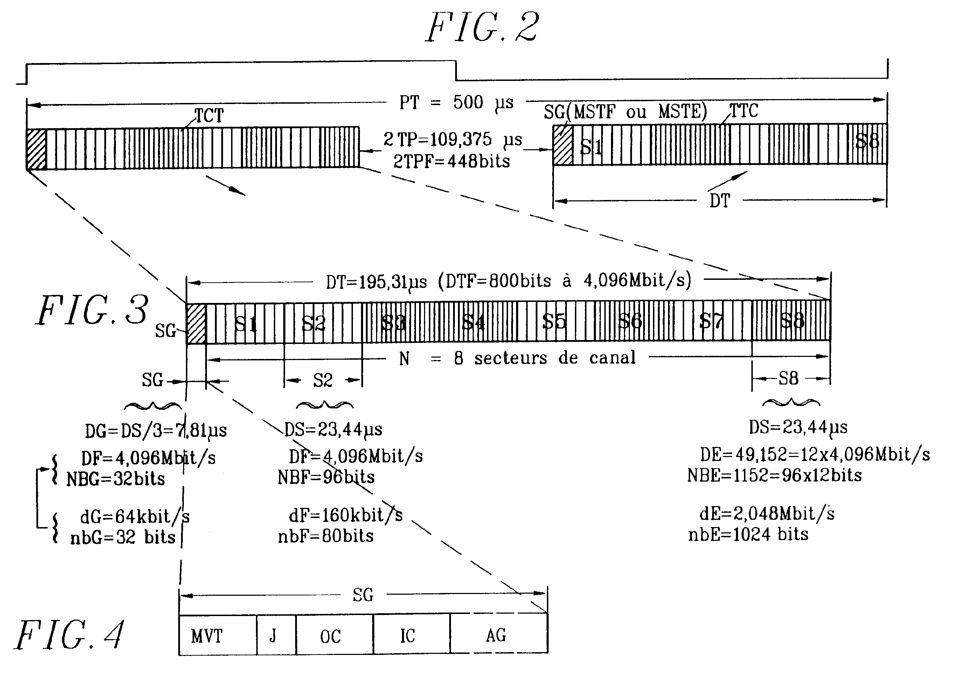

En se référant à la Fig. 2, la fréquence de transmission à l'alternat est égale à 2 kHz, soit une période d'alternat et de trame PT = 500 μs. Chaque trame TCT, TTC a une durée inférieure à la demi-période de trame PT/2 = 250 μs pour tenir compte du temps de propagation aller/retour maximal $2t_{max}$ entre la station centrale 1 et la station terminale la plus éloignée, soit un temps 2TP > $2t_{max}$ entre la fin de la transmission de la trame TCT et le début de la réception de la trame TTC dans la station centrale. Le temps 2TP inclut également un temps de garde très faible nécessaire au basculement du mode transmission au mode réception dans chacune des stations centrale et terminales. Par exemple, si on considère que l'information est transmise au débit en ligne faible DF = 4,096 Mbit/s, soit un temps bit égal à 0,244 μs, une trame TCT, TTC comporte 800 bits dure DT = 195,31 μs ce qui confère un temps maximal 2TP = 109,375 μs,

correspondant à 2TPF = 448 bits à 4,096 Mbit/s. Le temps 2TP est plus que nécessaire pour échanger des signaux entre la station centrale et une station terminale distante d'une dizaine de kilomètres de la station centrale, à travers quelques coupleurs.

Comme montré en détail à la Fig.3, particulièrement pour la trame aller TCT, une trame est composée d'un secteur de gestion SG en en-tête de trame et de N = 8 secteurs de canal de données numériques S1 à S8 réservés à des stations terminales d'abonné en communication avec la station centrale.

Le secteur de gestion SG sert à la gestion des relations entre la station centrale et les stations terminales, et notamment relativement à une station terminale donnée, à la mise en service de la station terminale, à l'autorisation de transmission de données, à des demandes de transmission d'un mot de référence d'amplitude (MRA) et d'un mot de synchronisation temporel (MST) ordonnées par la station centrale, à l'attribution de l'un des secteurs de canal de données, à l'identification du débit en ligne du secteur, à la demande d'une information d'état de la station terminale, etc... Comme détaillé à la Fig. 4, le secteur de gestion SG dans la trame aller TCT est composé d'un mot de verrouillage de trame MVT, d'une adresse de station terminale, appelée jeton J, d'un champ d'ordres de commande OC, d'un champ d'information de commande IC, et d'autres bits de gestion n'appartenant pas au cadre de la présente invention et désignés par AG et relatifs notammment à la maintenance des stations.

Le mot de verrouillage de trame MVT a typiquement 8 bits et est destiné, d'une manière classique, à synchroniser des bases de temps incluses dans les stations terminales d'abonné $2_1$ à $2_K$, jouant le rôle de stations esclaves, avec une horloge de base de temps incluse dans la station centrale 1, jouant le rôle de station maître. Le début de l'émission d'un mot MVT dans la trame aller TCT définit le début d'une période de trame PT. Notamment à partir de la détection du mot de verrouillage de trame MVT, chaque station terminale récupère l'horloge bit respective, ici égale à $H_{DF}$ = 4,096 MHz ou $H_{DE}$ = 49,152 MHz et en déduit les horloges nécessaires plus élevées, notamment 49,152 MHz pour une station terminale compatible avec le débit DF.

Le jeton J est constitué par le numéro 1 à K de la station terminale $2_1$ à $2_K$ à laquelle sont destinées les informations OC et IC suivantes dans le secteur de gestion. Lorsque K = 8, le jeton J est constitué par un mot à 3 bits. Pour éviter toute erreur, c'est-à-dire notamment pour éviter qu'une station terminale déjà synchronisée réponde à la station centrale suite à une erreur dans la transmission du jeton, une station terminale d'abonné doit détecter son numéro en tant que jeton dans deux trames aller successives TCT pour en déduire que les informations OC et IC, particulièrement pour une transmission du mot MST, lui sont destinées.

Le champ OC est constitué par différents ordres de commande codés selon un protocole d'échange entre la station centrale et les stations terminales. Ces ordres peuvent concerner la mise en service d'une station terminale, c'est-à-dire d'une part l'attribution à cette station terminale d'un secteur de canal disponible S1 à S8, et d'autre part une procédure pour le réglage progressif du niveau d'amplitude du transmetteur dans la station terminale au moyen d'un mot de référence en amplitude MRA au débit de DF = 4,096 Mbit/s comme décrit dans la EP-A-465300 précitée, et un ordre d'émission d'un mot de synchronisation temporelle MST pour déclencher une procédure de synchronisation selon l'invention. Les ordres de commande peuvent également concerner toutes demandes de communication d'arrivée ou de départ entre la station centrale et chaque station terminale.

Le champ IC contient des valeurs associées aux ordres de commande incluses dans le champ OC, par exemple une valeur numérique associée à une sommation ordonnée par un mot codé inclus dans le champ OC. Ces informations complémentaires de gestion servent à de nombreuses fonctions, et sont toutes exprimées sous forme numérique. En particulier, le champ IC peut contenir un mot de règlage d'amplitude [UD] pour une station terminale selon la EP-A-465300.

Les bits du secteur de gestion SG sont traités dans les stations au débit primaire dG = 64 kbit/s et sont donc au nombre de nbG = 64 x 0,5 = 32 pour PT = 500 μs. En imposant un débit en ligne DG dans le secteur SG égal au plus faible débit DF = 4,096 Mbit/s dans les secteurs de données afin que le secteur de gestion soit interprétable par toutes les stations terminales, la durée du secteur de gestion est DG = 7,81 μs, soit le tiers de la durée DS = 23,44 μs de chacun des secteurs de données S1 à S8.

Un secteur de données Sn ayant un rang donné n compris entre 1 et N = 8 n'est pas assigné une fois pour toutes à une station terminale, mais est dédié à une station terminale par la station centrale 1 en fonction des disponibilités des autres secteurs. Par exemple, lors d'une demande de communication, le secteur S2 de rang 2 peut être affecté à la station terminale $2_{k-1}$ de rang k-1. Chaque secteur de données est destiné à convoyer de l'information proprement dite entre la station terminale et une autre station terminale éloignée à travers la station centrale 1 et le cas échéant, le réseau téléphonique commuté général.

Selon la réalisation ici envisagée, les canaux numériques ont l'un des deux débits primaires dF = 160 kbit/s et dE = 2,048 Mbit/s. Toutefois, selon d'autres variantes, le nombre de débits primaires différents, et donc le nombre de débits en ligne dans les secteurs, peuvent être plus grands, voire égal au nombre N = 8 de secteurs. Les débits en ligne sont par exemple des sous-multiples du plus grand débit en ligne DE et peuvent être 4,096 Mbit/s ; 8,192 Mbit/s ; 12,288 Mbit/s ; 16,384 Mbit/s et 24,576 Mbit/s.

Les canaux numériques aux débits dF et dE sont ainsi partagés en groupe de nbF = 160 X 0,5 = 80 bits et nbE = 2058 X 0,5 = 1024 bits à chaque période de trame PT. Dans les moyens de multiplexage multidébit de la station centrale, ou dans des moyens de transmission d'une station terminale, un groupe de bits au débit primaire faible dF est comprimé dans un secteur, tel que le secteur S2 dans la Fig. 1, pour être transmis au débit en ligne faible DF = 4,096 Mbit/s ; ce secteur comprend alors NBF = (DF.DS) = 96 bits dont nbF = 80 bits de données utiles de canal. D'une manière analogue, un groupe de bits au débit primaire élevé dE est comprimé dans un secteur, tel que le secteur S8 dans la Fig.1, pour être transmis au débit en ligne élevé DE = 49,152 Mbit/s ; ce secteur comprend NBE = (DE.DS) = 1152 bits dont nbE = 1024 bits de données utiles de canal. Les bits supplémentaires dans les secteurs, respectivement aux nombres de NBF-nbF = 16 et NBE-nbE = 128, sont des bits de remplissage sans aucune signification, ou de préférence sont utilisés en partie à des fins de maintenance, et localisés en fin des secteurs.

Il est à noter que les débits en ligne qui sont déterminés en fonction des caractéristiques de fonctionnement des divers types de station terminales, sont de préférence des multiples du débit en ligne faible DF, et plus précisement du débit en ligne DG du secteur de gestion, afin que le secteur de gestion puisse être traité par toutes les stations terminales. Dans l'exemple présent, un bit au débit faible DF est équivalent à DE/DF = 12 bits successifs au même état logique et au débit DE, c'est-à-dire la largeur d'un bit au débit faible DF est 12 fois plus grande que la largeur d'un bit au débit élevé DE dans la trame.

Dans le sens retour, des stations terminales $2_1$ à $2_K$ vers la station centrale 1, la trame retour TTC à une structure analogue à la trame aller TCT, et comprend un champ de gestion SG et N secteurs de canal attribués aux stations terminales en communication. Comme montré à la Fig. 2, les secteurs S1 à S8 sont accolés dans la trame TTC, comme dans la trame TCT. La fin de la réception du dernier secteur S8 de la trame TTC dans la station centrale définit la fin d'une période de trame PT. Pour une même communication relative à une station terminale, les deux secteurs de canal de données qui lui sont attribués ont un même rang dans les trames TCT et TTC.

Toutefois, bien que le champ de gestion SG dans la trame retour TTC ait une structure analogue à celui dans la trame aller TCT, le champ SG dans la trame retour TTC n'est accolé au premier secteur S1 qu'à la fin de la procédure de synchronisation temporelle selon l'invention. Pendant cette procédure, le champ SG a une position temporelle comprise dans le temps de propagation $2t_k$ qui dépend de la distance entre la station terminale $2_k$ en cours de synchronisation et la station centrale 1. On rappelle que les champs SG dans les trames TCT et TCT ne supportent de l'information que relativement à une station terminale à la fois.

Pendant la synchronisation temporelle d'une station terminale $2_k$, le secteur SG dans la trame retour TTC débute par un mot de synchronisation temporelle MSTF, MSTE qui est de préférence une ou plusieurs répétition du mot de verrouillage de trame MVT émis par la station centrale. Le mot MVT a typiquement 8 bits. Le mot MSTF, MSTE constitue une information temporelle qui permet précisément à la station centrale de déduire le temps de propagation $t_k$ et donc la distance entre les stations, en comparant les bits du mot MSTE, MSTF, avec les bits du même mot préenregistré dans la station centrale. De même, pendant le réglage d'amplitude d'émission dans le transmetteur de la station terminale $2_k$ selon la EP-A-465300, qui peut être quasi-simultané à la synchronisation temporelle, le champ IC du secteur SG de la trame TTC est composé du mot de référence d'amplitude MRA constitué de huit bits successifs à l'état "1" dont l'amplitude dépend du niveau programmable d'émission dans le transmetteur. Cependant, si tous les mots du secteur SG dans la trame aller TCT et tous les mots du secteur SG dans la trame retour TTC, à l'exception du mot MSTF, MSTE, sont au débit constant faible DF = 4,096 Mbit/s, le mot MSTF, MSTE est au débit de transmission respectif DF, DE de la station terminale en cours de synchronisation. Ainsi le champ de mot de synchronisation MSTF, MSTE dans le secteur SG de la trame TTC a une durée égale à 8/4,096 = 1,95 μs. Le champ de synchronisation est occupé totalement par un mot MSTF ayant 8 bits pour une station terminale au débit faible DF = 4,096 Mbit/s, et est occupé, en début de champ, par un mot MSTE ayant également 96 bits pour une station terminale au débit élevé DE = 49,152 Mbit/s. Toutefois, selon d'autres variantes, le mot MSTE peut comprendre 8(DE/DS) = 96 bits au maximum. Les mots MSTF et MSTE contribuent ainsi à évaluer précisément les temps de propagation $t_1$ à $t_k$ en fonction des débits associés aux stations terminales afin de déterminer les instants d'émission des divers secteurs de données dans les stations terminales après les procédures respectives de synchronisation des stations terminales.

En outre, on notera que l'abscence de confusion sur la provenance du mot de synchronisation MSTF, MSTE et plus généralement du secteur SG de la trame TTC résulte de la transmission du mot MSTF, MSTE dès la fin de la réception de la trame aller TCT par la station terminale en cours de synchronisation.

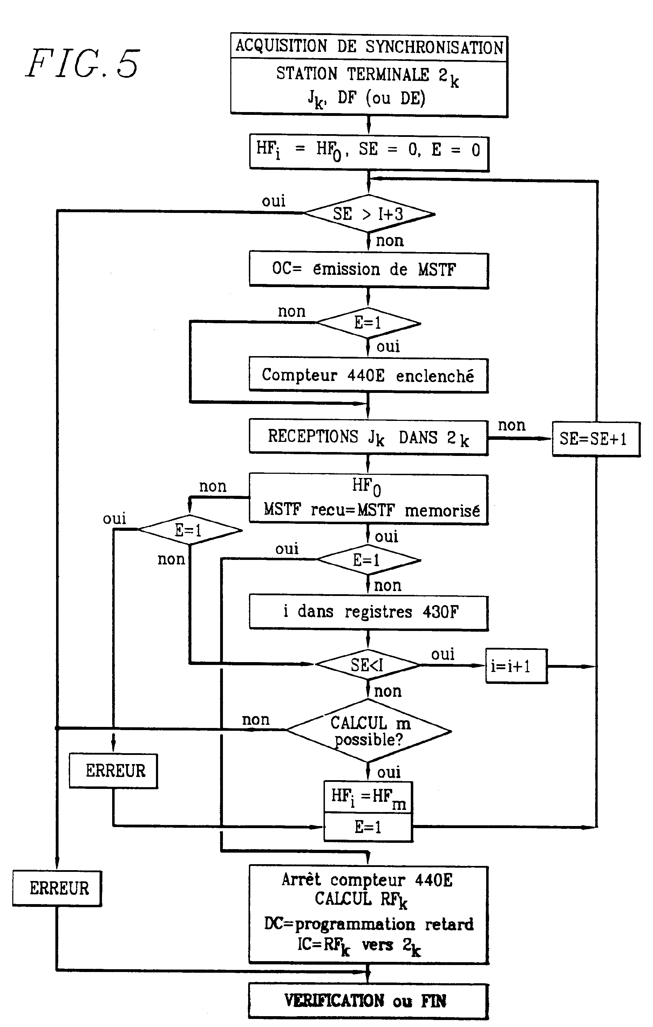

En référence aux Figs. 5 à 7, le procédé d'acquisition de synchronisation d'une station terminale quelconque $2_k$ comprend essentiellement une première étape consistant en une détermination précise de la phase d'horloge d'un signal transmis par la sta-

tion $2_k$ et reçu dans la station centrale 1, puis une seconde étape consistant en un calcul d'un retard en dépendance de la phase d'horloge déterminée dans la station centrale 1. Ce retard est programmé par la station centrale dans la station terminale $2_k$ afin que tout secteur de données émis par la station $2_k$ arrive pendant l'intervalle de temps correspondant de la trame retour TTC dans la station centrale. Ces deux étapes sont signalées respectivement par E = 0 et E = 1 dans l'algorithme d'acquisition de synchronisation montré à la Fig. 5, et comprennent ensemble 1 + I + 1 sous-étapes de boucle SE, la dernière sous-étape étant constituée par l'étape E = 1.

On supposera dans la suite que la station terminale $2_k$ fonctionnne au débit faible DF = 4,096 Mbit/s.

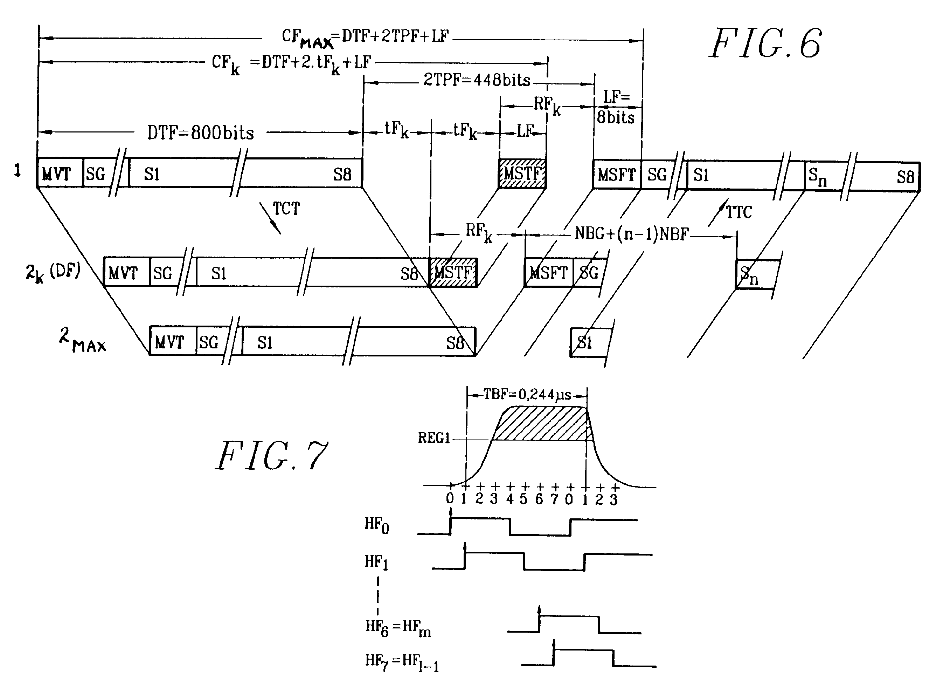

Comme déjà dit, une station terminale ne considère que les ordres de commande OC dans une trame aller TCT qui lui sont destinés qu'après avoir détecté son jeton $J_k$ dans deux trames TCT successives. Par conséquent, prélablement à ladite détermination de phase d'horloge, la station centrale 1 émet au début de deux sous-étapes SE = 0 et SE = 1 deux trames aller TCT qui comprennent notamment le mot du verrouillage de trame MVT, le jeton $J_k$ et un ordre de commande de synchronisation dans le champ OC. En réponse à la seconde détection du jeton $J_k$ dans la station terminale $2_k$, la station $2_k$ émet le mot de synchronisation temporelle MSTF au débit respectif DF immédiatement après la fin de la réception de la seconde trame aller TCT, c'est-à-dire après la fin de la réception du secteur S8 de cette trame. Le mot émis MSTF à ce stade est représenté sous la forme d'un rectangle hachuré dans la Fig. 6. Le mot MSTF est reçu dans la station centrale 1 après un temps DT + $2t_k$ succédant au début du mot MVT dans la seconde trame TCT. Sachant que la base de temps dans la station terminale $2_k$ récupère l'horloge à débit faible de DF = 4,096 Mbit/s, le temps DT + $2t_k$ est déterminé au temps bit TBF = 0,244 µs près.

La détermination de phase d'horloge consiste à détecter le mot MSTF dans la station centrale par rapport à I signaux d'horloge prédéterminés $HF_O$ à $HF_{I-1}$ au débit DF de la station terminale $2_k$ qui sont successivement déphasés deux-à-deux de TBF/I. Typiquement, comme montré à la Fig. 7, l'entier I est égal à huit. Ainsi, à la fin de la seconde sous-étape SE = 1, le mot MSTF reçu dans la station centrale est détecté par rapport aux fronts montants d'un premier signal horloge $HF_O$ qui correspond par exemple au signal d'horloge maître utilisé pour émettre le secteur de gestion de la trame aller TCT, et est comparé à un mot MSTF mémorisé en mémoire morte dans la station centrale. Les autres sous-étapes suivantes SE = 2 à SE = I consistent, comme dans l'étape SE = 1, chacune à émettre une trame TCT incluant le jeton $J_k$ par la station centrale, à émettre le mot MSTF par la station terminale $2_k$ dès la fin de la réception de la trame TCT, à détecter le mot MSTF par rapport au signal

d'horloge respectif $HF_1$ à $HF_{I-1}$, et à comparer le mot détecté avec le mot mémorisé MSTF dans la station centrale.

Dans la Fig. 7 est représenté en trait plein un bit à l'état logique "1" dans le mot MSTF reçu dans la station centrale 1. Comme il est connu, le bit a particulièrement des fronts montant avant et descendant arrière déformés en raison des traitements de celui-ci entre les stations terminale et centrale et des contraintes d'affaiblissement dans le support de transmission SUT. Selon l'exemple montré à la Fig. 7, seuls les signaux d'horloge $HF_3$ à $HF_7$ et $HF_O$ et $HF_1$ autorisent une détection du bit "1" au-dessus d'un seuil de régénération prédéterminé REG1, et par conséquent une égalité de bit des mots comparés reçu et mémorisé MSTF. Il en est de même pour un bit à l'état logique "0" dans le mot reçu MSTF ayant une amplitude inférieure à un seuil de régénération prédéterminé REGO qui est inférieur ou égal à REG1. Comme indiqué dans la Fig. 5, à la fin de chaque sous-étape SE = i+1, où l'indice i est un entier compris entre O et I-1, le numéro i du signal d'horloge $HF_i$ déphasé de i.TBF/I par rapport au signal $HF_O$ est mémorisé s'il y a identité des mots comparés. A la fin de la sous-étape SE = I, la station centrale sélectionne un signal d'horloge milieu $HF_m$, égal ici à $HF_6$ selon la Fig. 7, qui est sensiblement au "milieu" dans la série des signaux d'horloge retenus $HF_3$ à $HF_7$, $HF_O$ et $HF_1$. Lorsque la série comprend un nombre pair de signaux, l'indice m est par exemple celui immédiatement inférieur au "milieu" ou moyenne de la série.

La station centrale effectue alors la dernière sous-étape SE = I + 1 consistant en l'étape de calcul de retard E = 1. Le signal d'horloge milieu $HF_m$ sert de signal d'horloge de référence non seulement pour le calcul du retard programmable, mais également pour regénérer dans la station centrale 1 le secteur de données attribué ultérieurement à la station terminale $2_k$, ce qui se traduit par un taux d'erreur binaire minimum.

L'étape de calcul de retard E=1 consiste à calculer le retard à imposer $RF_k$ dans la station terminale $2_k$ pour qu'un mot de synchronisation temporelle MSTF émis par cette station arrive dans la station centrale 1 précisément au début de la trame retour TTC constituée par les stations terminales en communication. Ce retard $RF_k$ ainsi que les autres durées et temps de propagation dans la Fig. 6 sont exprimés en nombre correspondants de bits au débit DF de la station $2_k$, et sont évalués au moyen d'un compteur binaire 440F inclus dans la station centrale.

Au début de l'étape E = 1, le compteur 440F est mis à zéro avant l'émission de la trame TTC. Le compteur est ensuite enclenché et rythmé par le signal d'horloge milieu $HF_m$ dès le début d'émission du mot MVT de la trame aller TTC. Le comptage des impulsions du signal $HF_m$ dans le compteur 440F est arrêté dès la réception du mot MSTF, indiqué sous la forme d'un rectangle hachuré dans la Fig. 6, émis par la station $2_k$ et détecté au moyen du signal $HF_m$. Le compte du compteur est alors $CF_k = DTF + 2 tF_k + LF$, où DTF = 800 dénote le nombre de bits au débit DF susceptibles d'être contenus dans une trame TTC de durée DT, $tF_k$ dénote en nombre de bits au débit faible le temps de propagation $t_k$ entre les stations 1 et $2_k$, et LF = 8 dénote le nombre de bits dans le mot MSTF. Lorsque la station $2_k$ est la station terminale $2_{MAX}$ la plus éloignée de la station centrale, comme montré à une troisième ligne de la Fig. 6, le retard à imposer $RF_{MAX}$ est nul, tandis que le compte correspondant du compteur 440F est maximum et est le suivant :

$$CF_{MAX} = DTF + 2.TPF + LF,$$

où $2.TPF$ exprime en nombre de bits le temps de propagation aller/retour maximum 2TP entre la fin de la trame aller TCT et le début de la trame retour TTC.

Le retard $RF_k$, également exprimé en nombre de bits, à imposer dans la station terminale $2_k$ est déduit de la Fig. 6 :

$$RF_k = CF_{MAX} - CF_k,$$

et est ainsi obtenu par simple soustraction d'une valeur mesurée $CF_k$ à une valeur fixe connue $CF_{MAX}$. Bien entendu, le retard $RF_k$ est représentatif de la différence entre les temps de propagation : $TP-t_k$.

Après l'évaluation du retard $RF_k$ dans la station centrale, ou de préférence après deux évaluations successives et identiques du retard $RF_k$ au cours de deux étapes E = 1, la station centrale 1 transmet un ordre inséré dans le champ OC, pour programmer un moyen de retard, accompagné de la valeur numérique $RF_k$ dans le champ IC d'une prochaine trame aller TCT, ou de préférence de deux trames aller successives. Le moyen de retard est inclus dans la station terminale $2_k$ et est programmé en fonction de $RF_k$ dès réception du secteur de gestion de la trame aller précédente. Il en résulte que le prochain secteur de gestion de trame TTC est émis par la station $2_k$ après un retard $RF_k$ succédant à la fin de la trame TTC. La station terminale $2_k$ est alors synchronisée. En particulier, l'émission ultérieure d'un secteur de canal Sn dans une trame retour TTC par la station $2_k$, en réponse à un ordre d'attribution par la station centrale, débute précisément après un retard de $RF_k$ + NBG + (n-1)NBF succédant à la fin de la réception d'une trame aller TCT.

Le procédé de synchronisation décrit ci-dessus est valable quel que soit le débit de fonctionnement d'une station terminale. Par exemple, pour une station terminale opérant au débit DE = 49,152 Mbit/s, les signaux d'horloge $HF_O$ à $HF_{I-1}$ et $HF_m$ sont à remplacer par des signaux d'horloge $HE_O$ à $HE_{I-1}$ et $HE_m$ au débit DE, les nombre de bits dans la Fig. 6 sont à multiplier par le rapport de débits DE/DF = 12, et le mot MSTF est à remplacer par le mot MSTE.

Les divers moyens fonctionnels inclus dans la station centrale 1 pour mettre en oeuvre le procédé de synchronisation sont maintenant décrits, après avoir rappelé la structure générale de la station centrale.

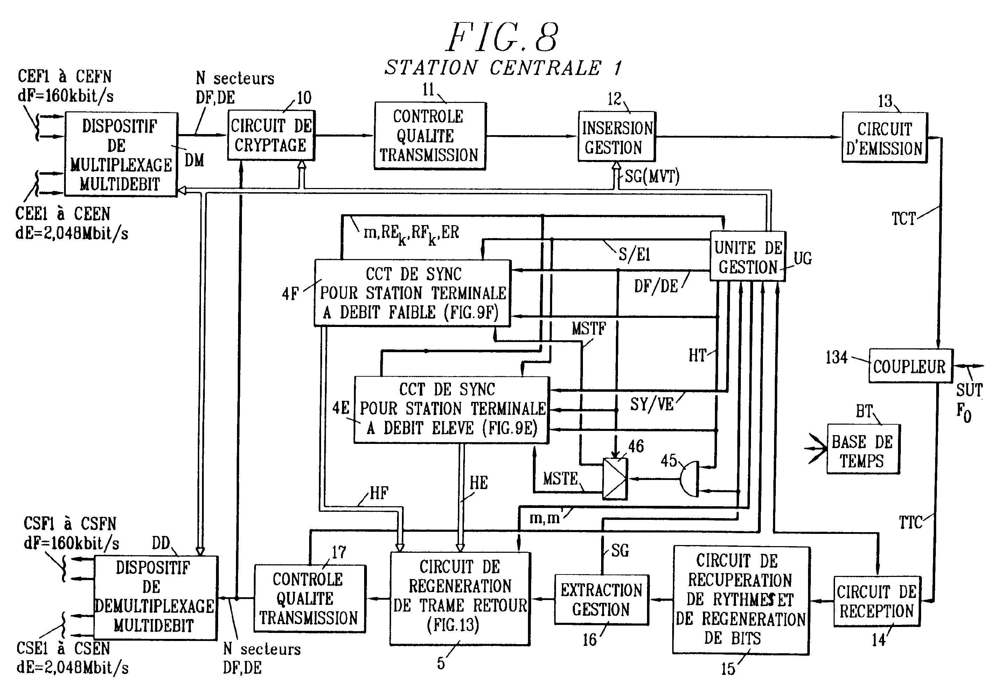

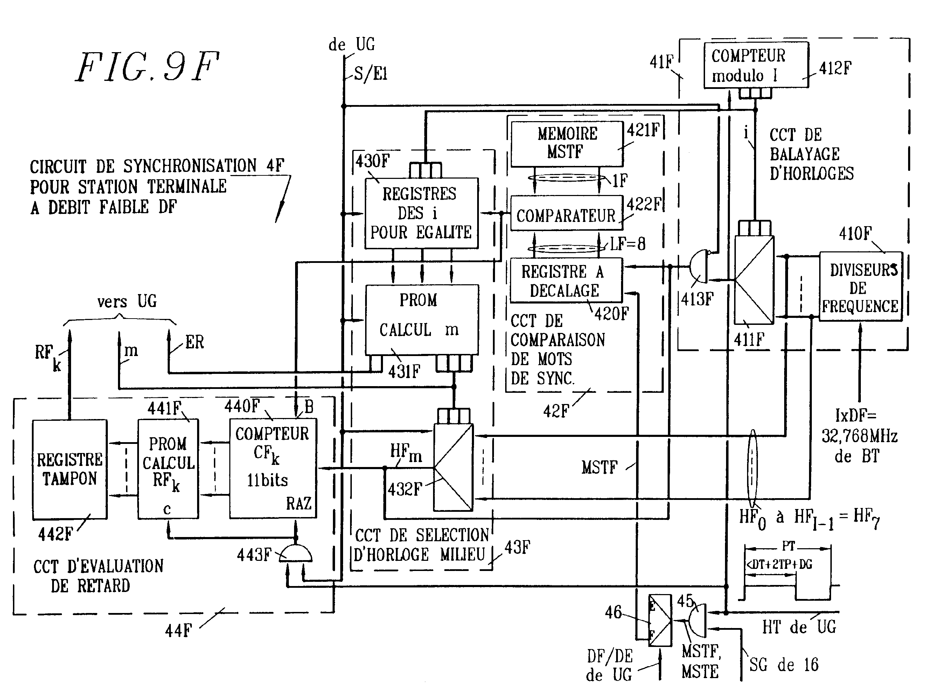

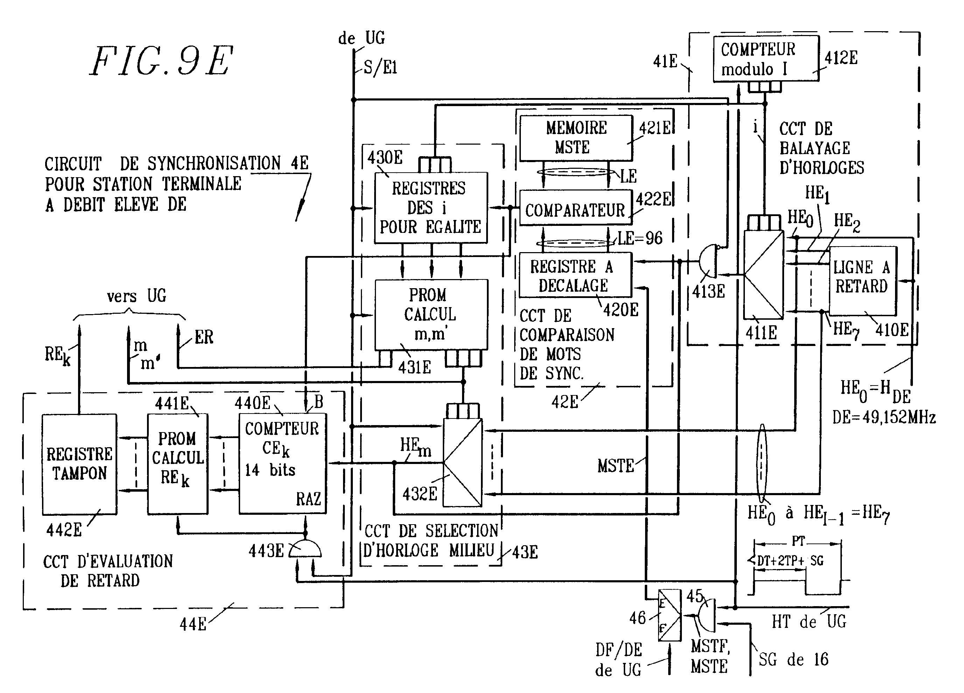

En référence à la Fig. 8 et comme décrit dans la demande de brevet français N° 90-13923, la station centrale 1 comprend essentiellement des moyens de multiplexage et d'émission, des moyens de réception et de démultiplexage, une base de temps BT et une unité de gestion des communications UG.

Dans les moyens de multiplexage et d'émission, un dispositif de multiplexage multidébit DM multiplexe temporellement N = 8 canaux numériques en communication qui sont sélectionnés dans des groupes de canaux entrants parallèles associés aux divers débits. Selon la réalisation illustrée, deux groupes de canaux entrants CEF1 à CEFN et CEE1 à CEEN sont prévus respectivement aux débits dF = 160 kbit/s et dE = 2,048 Mbit/s. Le dispositif de multiplexage DM élève les débits des canaux sélectionnés aux débits DF et DE afin de former les N=8 secteurs S1 à SN d'une trame aller TCT. Puis les secteurs S1 à SN sont cryptés dans un circuit de cryptage 10 en dépendance des secteurs respectifs de données S1 à SN dans la trame retour reçue TTC qui est regénérée par un même signal d'horloge local $H_{DE}$, comme on le verra dans la suite. Les secteurs de trame ainsi cryptés sont analysés dans un circuit de contrôle qualité de transmission 11 pour introduire un bit de parité pour chacun des secteurs en fin du secteur, puis traversent un circuit d'insertion de bits de secteur de gestion 12 où le secteur de gestion SG est introduit en-tête de trame TCT sous la commande de l'unité de gestion UG. Enfin, la trame TCT ainsi constituée est transmise dans le support de transmission arborescent SUT au début d'une première demi-période à l'alternat PT/2 par un circuit d'émission 13 par exemple à diode LED ou diode laser.

Les moyens de réception et de démultiplexage dans la station centrale 1 comprennent, à partir du support de transmission SUT, un circuit de réception 14, par exemple incluant un photodétecteur à diode PIN, qui est relié au support SUT et au circuit 13 par un coupleur optique local 134, un circuit de récupération de rythmes et de régénération de bits 15 pour régénérer classiquement les bits en fonction des débits en ligne dans les secteurs, un circuit 16 où sont extraits les divers champs qui composent le secteur de gestion SG dans une trame retour reçue TTC et qui sont traités principalement par l'unité de gestion UG, et un circuit 17 qui contrôle en particulier la parité de chacun des secteurs S1 à SN dans la trame TTC par rapport à des bits de parité en fin des secteurs et qui signale toute anomalie résultant de ce contrôle à l'unité de gestion UG. Les secteurs de données S1 à SN d'une trame TTC sont appliqués en série à un dispositif de démultiplexage multidébit DD qui démultiplexe les secteurs après les avoir regroupés en un signal multiplex à la fréquence de (1024 x 8)/500 = NS x dE = 16,384 MHz pendant une période de trame PT

= 500 µs, en considérant chacun des N = 8 secteurs comme composé d'un groupe de 1024 bits utiles, quel que soit le débit en ligne du secteur, puis qui les aiguille vers au plus N canaux sortants en communication adressés parmi un groupe de N canaux sortants CSF1 à CSFN au débit dF = 160 kbit/s et un groupe de N canaux sortants CSE1 à CSEN au débit dE = 2,048 Mbit/s.

La base de temps BT sert d'horloge maître par rapport aux bases de temps esclaves dans les stations terminales $2_1$ à $2_K$. La base de temps BT fournit à partir de la fréquence de 49,152 MHz correspondant au débit élevé en ligne, tous les signaux d'horloge nécessaires aux opérations de multiplexage/démultiplexage, de transmission/réception des trames, et de synchronisation des stations terminales.

L'unité de gestion UG gère les communications et, particulièrement, en association avec des circuits de synchronisation 4F et 4E spécifiques à l'invention, la synchronisation de moyens d'émission de transmetteur dans les stations terminales en fonction de leurs distances à la station centrale pour éviter tout chevauchement des secteurs dans la trame reçue par la station centrale, et le règlage télécommandé de la puissance desdits moyens d'émission afin que les moyens de réception dans la station centrale reçoivent des signaux numériques de même niveau d'amplitude, quelles que soient les distances des stations terminales à la station centrale. Cette gestion est assurée par l'intermédiaire notamment des bits du secteur de gestion SG des trames suivant les deux sens de transmission. Du point de vue des communications, l'unité de gestion UG établit le nombre de stations terminales en service, attribue un secteur de données à chaque station terminale souhaitant communiquer, et associe chaque secteur à des canaux entrant et sortant pour une communication relative à la station terminale et donc au débit en ligne de la station.

Selon l'invention, la station centrale 1 comprend, en outre, autant de circuits de synchronisation de station terminale 4F, 4E qu'il y a de débits en ligne différents DF, DE, qui sont distingués par l'unité de gestion UG, et un circuit de régénération de secteurs de données de trame retour 5 qui régénère globalement chaque trame retour reçue TTC en positionant consécutivement les secteurs les uns par rapport aux autres et qui est interconnecté entre la sortie de données du circuit d'extraction de secteur de gestion 16 et l'entrée de données du circuit de contrôle de qualité de transmission 17. Les circuits 4F, 4E et 5 sont décrits ci-après.

Les circuits 4F et 4E étant fonctionnellement identiques, seul le fonctionnement du circuit de synchronisation 4F pour station terminale à débit faible DF est décrit en détail.

En référence à la Fig.9F, le circuit de synchronisation 4F comporte essentiellement un circuit de balayage d'horloges 41F, un circuit de comparaison de mots de synchronisation temporelle 42F, un circuit de sélection d'horloge milieu 43F, et un circuit d'évaluation de retard 44F.

Dans le circuit de balayage d'horloges 41F, un ensemble de diviseurs de fréquence 410F établit les I = 8 signaux d'horloge $HF_O$ à $HF_{I-1}$ ayant le débit DF et déphasés entre eux de TBF/I à partir d'un signal d'horloge à la fréquence I x DF = 32,768 MHz produit par la base de temps BT. Les diviseurs de fréquence 410F appliquent les signaux d'horloge $HF_O$ à $HF_{I-1}$ aux I entrées d'un multiplexeur 411F qui sont sélectionnées par les numéros 0 à I - 1 produits par un compteur modulo-I 412F à travers un bus de sélection à 3 fils. Conformément aux sous-étapes SE=1 à SE=I (Fig. 5), une entrée d'horloge du compteur 412F reçoit un signal d'horloge de trame HT à la fréquence de trame d'alternat pendant I = 8 périodes de trame consécutives. Les signaux d'horloge $HF_O$ à $HF_{I-1}$ sont ainsi appliquées respectivement pendant I = 8 créneaux du signal HT à une entrée d'horloge d'un registre à décalage 420F inclus dans le circuit de comparaison 42F, à travers une entrée directe d'une porte ET à deux entrées 413F.

Une entrée de données du registre 420F reçoit des mots de synchronisation MSTF à travers une porte ET à deux entrées 45 et un démultiplexeur à deux sorties 46 qui sont communs aux circuits 4F et 4E (Fig.8). Une première entrée de la porte 45 est reliée à la sortie de secteur de gestion du circuit d'extraction 16, connectée à l'unité UG, tandis qu'une seconde entrée de la porte 45 reçoit le signal HT établi par l'unité de gestion. Chacun des créneaux du signal HT débute en même temps que l'émission d'une trame aller TCT par la station centrale, ou selon d'autre variante au plus tard à la fin de l'émission d'une trame aller, et se termine au moins après la durée de réception normale d'un champ de mot de synchronisation MSTF, MSTE lorsque le secteur de gestion SG est accolé à la trame retour TTC. Toutefois, pour tenir compte de dérive thermique causant des déphasages lents, comme on le verra dans la suite, les créneaux du signal HT incluent sensiblement la durée DG du secteur de gestion SG. Par conséquent, un créneau du signal HT a une longueur inférieure à DT + 2TP + DG = 195,31 + 109,375 + 7,81 µs = 312,5 µs.

L'intervalle de temps 2TP + DG pendant lequel un mot de synchronisation temporelle transmis par l'une des stations terminales est susceptible d'être reçu par la station centrale, est toujours ainsi contenu dans un créneau du signal HT qui ouvre la porte ET 45. Des première et seconde sorties du démultiplexeur 46 dirige les mots MSTF et MSTE en sortie de la porte 45 respectivement vers les registres à décalage 420F et 420E dans les circuits 4F et 4E en fonction d'un signal de sélection de débit DF/DE produit par l'unité de gestion UG et donc en fonction du débit de la station terminale en cours de synchronisation.

Dans le circuit de comparaison 42F, LF = 8 sorties parallèles du registre 420F et LF = 8 sorties parallèles d'une mémoire morte 421F sont reliées respectivement aux deux bus d'entrée d'un comparateur à seuils REG1, REGO et bit à bit 422F. La mémoire 421F contient un mot MSTF et est de préférence une mémoire programmable du type PROM ou du type cablée avec straps. A chacune des périodes des signaux d'horloge $HF_O$ à $HF_{I-1}$ respectivement pendant I créneaux du signal HT, le comparateur 422F compare le mot préenregistré dans la mémoire 421F avec le contenu du registre 420F afin d'y détecter un mot reçu MSTF.

En réponse à une égalité de mots de synchronisation, la sortie du comparateur 422F commande l'écriture du numéro i du signal d'horloge correspondant $HF_i$ qui est délivré par le compteur 412F, dans l'un des I registres de stockage 430F associés à un circuit PROM de calcul de m 431F inclus dans le circuit de sélection d'horloge milieu 43F. En supposant que toutes les comparaisons bit à bit sont conformes à l'exemple illustré à la Fig. 7, les registres 430F ont mémorisés les numéros 3, 4, 5, 6, 7, 0 et 1 des signaux d'horloge ayant impliqué une égalité de mots de synchronisation, à la fin de la sous-étape SE8. L'unité de gestion UG arrête la transmission du signal HT et déclenche la seconde étape E=1 en appliquant un signal de commande de calcul S/E1 à l'état "1" aux registres 430F et au circuit de calcul 431F. Lesdits numéros mémorisés de signaux d'horloge sont transférés dans le circuit 431F qui calcule l'indice m du signal d'horloge milieu $HF_m$, égal à $HF_6$ selon la Fig. 7. L'indice m est appliqué par un bus de sortie à 3 fils du circuit 431F aux entrées de sélection d'un multiplexeur 432F qui reçoit les I = 8 signaux d'horloge $HF_0$ à $HF_{I-1}$ sortant des diviseurs de fréquence 410F. La sortie du multiplexeur 432F fournit le signal d'horloge milieu $HF_m$ à l'entrée d'horloge du registre à décalage 420F et à une entrée d'horloge d'un compteur 440F qui est inclus dans le circuit 44F.

Le circuit d'évaluation de retard 44F comprend, outre le compteur 440F, un circuit PROM de calcul 441F, un registre tampon 442F et une porte ET à deux entrées 443F.

Le signal S/E1 déclenchant la seconde étape E=1 est également appliqué à une entrée inverse de la porte ET 413F afin d'inhiber tout signal d'horloge fourni par le multiplexeur 411F en entrée du registre 420F, et appliqué à une première entrée de la porte 443F. La sortie de la porte 443F est reliée à une entrée de remise à zéro RAZ du compteur 440F et à une entrée de commande C du circuit 441F. Au début de l'émission d'une trame aller TCT dans une prochaine période de trame PT, l'unité de gestion UG applique un créneau de signal HT aux portes 45 et 443F. Après remise à zéro, le compteur 440F compte les impulsions du signal d'horloge $HF_m$, et le comparateur

422F détecte le mot de synchronisation MSTF pendant le créneau de signal HT. Dès que cette détection intervient, le comparateur 422F arrête le comptage d'impulsion dans le compteur 440F, la sortie du comparateur étant reliée à une entrée de blocage B du compteur. Le compte du compteur 440F est alors égal à $CF_k = DTF + 2 tF_k + LF$ selon la Fig. 6. Le circuit de calcul 441F contenant initialement le compte maximum $CF_{MAX}$ en mémoire morte programmable, calcule le retard $RF_k = CF_{MAX} - CF_k$ après avoir lu le compte $CF_k$ dans le compteur 440F en réponse à la fin du créneau de signal HT signalée à l'entrée C lors de l'étape E=1. De préférence, comme déjà dit, l'étape E = 1 est réitérée afin de calculer une seconde fois le compte $CF_k$ et le retard $RF_k$; dans ce cas, le circuit de calcul 441 compare les deux retards calculés, et s'il y a identité, ordonne la phase finale de synchronisation.

Le résultat du calcul $RF_k$ est ensuite transféré du circuit 441F vers l'unité de gestion UG à travers le registre tampon 442F convertissant en série le mot $RF_k$. L'unité de gestion UG insert alors le jeton $J_k$, le mot $RF_k$ dans le champ IC, et un ordre de programmation de retard dans le champ OC, dans deux prochaines trames aller successives TCT, à travers le circuit d'insertion de secteur de gestion 12. Dans la station terminale $2_k$ en cours de synchronisation, un circuit d'extraction de secteur de gestion fournit le mot $RF_k$ à une unité de gestion qui, en réponse au second ordre de programmation de retard reçu, programme en conséquence une ligne à retard numérique incluse en sortie d'émission de la station terminale, typiquement entre un circuit d'insertion de secteur de gestion et un circuit d'émission illustrés dans la demande de brevet français N° 90-13923.

Il est à noter que, conformément à l'algorithme de la Fig. 5, un signal d'erreur ER est délivré par le circuit de calcul de m 431F à l'unité de gestion UG, soit à la fin de la sous-étape SE=I lorsque l'indice m ne peut être déterminé, soit à la fin d'une étape E=1 lorsque le mot de synchronisation MSTF attendu dans le créneau de signal HT n'a pas été détecté. Dans le premier cas, le défaut de détermination d'indice m peut être signalé par exemple lorsqu'au plus trois égalités de mot sont détectées; ceci signifie un défaut de fonctionnement notamment dans le circuit de récupération d'horloge ou dans l'unité de gestion de la station terminale. Dans le second cas, le défaut de détection du mot MSTF peut être dû à une traduction erronée de l'ordre de programmation du retard ou à un défaut de fonctionnement de la ligne à retard dans la station terminale; l'unité de gestion UG décide alors, en variante, de réitérer l'étape E=1 une ou deux fois : SE = I + 2 ou SE = I + 3 (Fig. 5). Dans tous les cas, lorsque l'erreur persiste, celle-ci est signalée à un opérateur dans la station centrale 1 pour effectuer une opération de maintenance de la station terminale, et l'unité de gestion UG passe à une tâche suivante, par exemple pour effectuer, le cas échéant, la synchronisation d'une autre station terminale.

Comme déjà dit, tous les circuits de synchronisation 4F et 4E sont fonctionnellement identiques et ne diffèrent entre eux que par des moyens fonctionnels dépendant des débits en ligne DF et DE associés aux stations terminales, c'est-à-dire dépendant des signaux d'horloge et, selon d'autres variantes, des nombres de bits dans les mots de synchronisation temporelle.

Dans le circuit de synchronisation 4E pour débit élevé DE et, par exemple, pour mot de synchronisation MSTF à 96 bits montré à la Fig.9E, on retrouve des circuits 41E, 42E, 43E et 44E incluant des composants équivalents à ceux inclus dans les circuits 41F, 42F, 43F et 44F et désignés par des repères numériques respectifs accolés à la lettre E, au lieu de la lettre F.

Lorsque le débit est élevé, tel que le débit DE = 49,152 Mbit/s, la technologie des circuits numériques classiques n'autorise pas à produire un signal d'horloge ayant une fréquence très élevée de $49,152 \times 8 = 393,2$ MHz. Les diviseurs de fréquence 410F sont remplacés par une ligne à retard 410E dans le circuit de balayage d'horloge 41E. La ligne à retard 410E établit à partir d'un signal d'horloge de référence $H_{DE}$ à 49,152 MHz produit par la base de temps BT, I signaux d'horloge $HE_O = H_{DE}$ à $HE_{I-1} = HE_7$ à 49,152 MHz ayant des déphasages successifs entre eux de TBE/I, où TBE = 1/49,152 μs. Les signaux d'horloge $HE_O$ à $HE_{I-1}$ sont équivalents aux signaux $HF_O$ à $HF_{I-1}$ et sont utilisés non seulement pour la procédure de synchronisation SY d'une station terminale à débit DE lors de sa mise en service, mais également lors d'une procédure cyclique de vérification et surveillance de synchronisation, comme on le verra dans la suite.

Dans le circuit de comparaison 42E, le nombre d'étages du registre à décalage 420E, de la mémoire 421E et du comparateur 422E est égal à la longueur LE = LF (DE/DF) = 96 bits des mots de synchronisation MSTE selon l'exemple précédent. Comme la capacité du compteur 412E, les registres 430E mémorisant les numéros i impliquant des égalités de mots sont au nombre de I + 4 = 12.

La capacité du compteur 440F dans le circuit 44F égale à $11 = Log_2 2048 > Log_2 (800 + 448 + 8)$ bits est remplacée par celle de $14 = Log_2 16384 > Log_2 12(800 + 448 + 8)$ bits du compteur 440E dans le circuit 4E.

La synchronisation de station terminale telle que décrite ci-dessus en référence aux Figs. 5 et 9F, 9E intervient particulièrement lors de la connexion d'une station terminale au réseau de transmission SUT et de l'installation de celle-ci, lors de l'établissement d'une communication et lors de perte d'information dans des trames soit dans la station centrale 1 soit dans l'une des stations terminales $2_1$ à $2_K$.

En fonctionnement normal, l'unité de gestion UG de la station centrale 1 peut recevoir au moins un signal d'erreur ER après l'une des vérifications cycliques VE de la synchronisation des stations terminales. Un tel signal d'erreur est notamment dû à des dérives thermiques lentes du support de transmission SUT, tel que fibre optique, modifiant les temps de propagation $t_1$ à $t_K$ de quelques nanosecondes.

Un tel phénomène de dérive est négligeable pour des débits faibles DF puisque la synchronisation est produite au 1/I = 1/8ième de temps de bit TBF supérieur à plusieurs dizaines de nanosecondes. Un secteur de données à l'un des débits faibles de quelques Mbit/s est alors simplement et directement regénéré d'abord à la fréquence correspondante du signal d'horloge milieu $HF_m$ respectif établit lors de la synchronisation.

Par contre, le phénomène de dérive thermique n'est plus négligeable pour la régénération d'un secteur de données ayant un débit élevé, tel que le débit DE = 49,152 Mbit/s. Dans ce cas, la synchronisation est effectuée à quelques nanosecondes près, typiquement à TBE/I = 2,5 ns près. Il pourrait être envisagé de décrémenter ou d'incrémenter d'une ou de plusieurs fractions de temps bit TBE/I, le retard $RE_k$ dans la station terminale correspondante; ceci entraînerait un protocole de commande et d'échange de signaux complexe et une interruption de la communication en cours.

Le circuit de régénération de trame retour 5 en liaison avec le circuit 4E selon l'invention résoud ce problème tout en remédiant à l'inconvénient précédent.

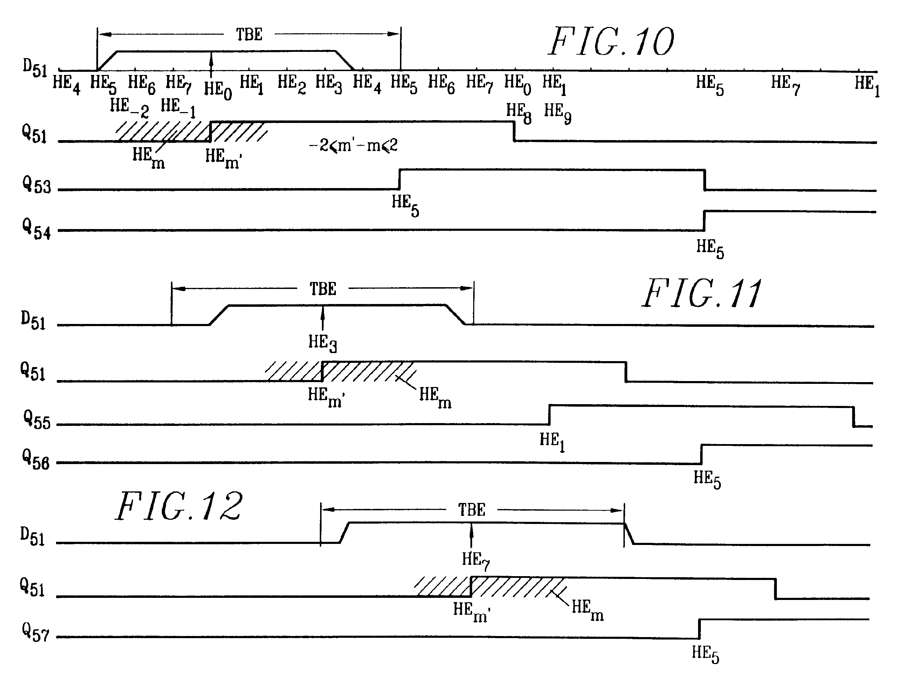

Le principe de la régénération d'un bit de durée TBE dans un secteur de données à débit élevé DE reçu dans la station centrale est expliqué brièvement en référence aux premières lignes des chronogrammes des Figs. 10 à 12. Il est supposé que lors d'une vérification de synchronisation VE', $HE_m$ désigne le signal d'horloge milieu sélectionné pendant une vérification précédente VE, et $HE_{m'}$ désigne le signal d'horloge milieu sélectionné après la vérification en cours VE'.

La procédure de vérification VE' est analogue à la procédure de synchronisation initiale SY sans l'étape de calcul de retard, et s'effectue par rapport à un mot MSTE dans un secteur de gestion accolé à la trame TTC. Sachant que la fréquence des vérifications de synchronisation est élevée par rapport aux dérives thermiques prévues, un décalage du signal d'horloge milieu ne peut pas être, en pratique, supérieur à un quart de temps bit, soit supérieur à 2 TBE/I, ce qui se traduit par $| m' - m | \leq 2$. Un tel décalage résulte d'une variation de temps de propagation $t_k$ due, par exemple, à un échauffement de fibre optique, et donc à un allongement de fibre optique, entre deux procédures de vérification de synchronisation d'une station terminale $2_k$. Le circuit 431E indique à l'unité de gestion UG le nouvel indice m' dont la différence m' - m avec l'indice précédent m peut varier de -2 à +2 et est représentative de la dérive thermique du temps de propagation. Dans ces conditions, il est nécessaire de considérer fictivement I+4 signaux d'horloge $HE_{-2} = HE_6$, $HE_{-1} = HE_7$, $HE_O$ à $HE_7$, $HE_8 = HE_O$ et $HE_9 = HE_1$ afin que chaque indice m puisse être remplacé par un nouvel indice m' tel que $|m' - m| \leq 2$ après le second calcul effectué pendant la vérification VE' confirmant la valeur de m'. La valeur de m' peut être égale à -2, -1, O à 7, 8 et 9 en sortie du circuit 431E reliée à l'unité de gestion. Le circuit de régénération de trame retour 5 distingue alors trois ensembles de signaux d'horloge $HE_{-2}$ à $HE_1$, $HE_2$ à $HE_5$ et $HE_6$ à $HE_9$ afin de synchroniser tous les secteurs de trame au débit élevé par rapport à un même signal d'horloge, typiquement $HE_5$ comme on le verra dans la suite, quelle que soit la différence d'indice m'-m.

Les Figs. 10, 11 et 12 illustrent respectivement des exemples de régénération d'un bit à débit élevé pour les trois ensembles de signaux d'horloge.

Dans la première ligne de la Fig. 10 est représenté un bit de largeur TBE qui est reçu pendant la procédure VE' et qui correspond à un signal d'horloge milieu $HE_{m'} = HE_{O'}$ comme montré à la seconde ligne de la Fig. 10. Cet exemple est associé aux cas particuliers suivants. Avant l'influence d'une dérive thermique, le signal d'horloge milieu $HE_m$ dont l'indice m était calculé pendant la procédure VE peut être en particulier l'un des signaux $HE_O$ ou $HE_1$, tandis que le signal $HE_{m'}$ est $HE_6$, $HE_7$ ou bien $HE_O$, $HE_1$. Une lecture intermédiaire du bit reçu par le signal d'horloge $HE_5$ entre la lecture avec le signal $HE_{m'}$ et celle avec le signal d'horloge de régénération $HE_5$, permet de synchroniser tout bit lu avec un signal $HE_{m'}$ appartenant au premier ensemble.

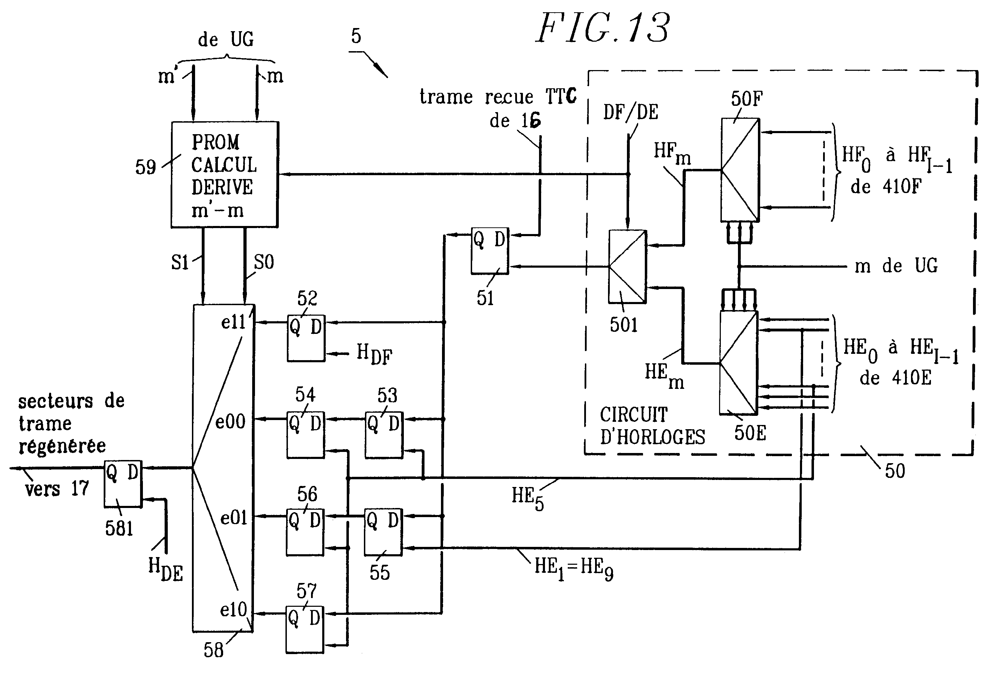

Dans la première ligne de la Fig. 11 est illustré un bit de largeur TBE reçu pendant la procédure VE' qui a sélectionné un signal d'horloge $HE_{m'} = HE_3$ comme montré à la seconde ligne de la Fig. 11. Dans ce cas, l'indice m du signal d'horloge $HE_m$ calculé lors de la procédure précédente VE était égal à 1, 2, 3, 4 ou 5. Une lecture intermédiaire du bit reçu avec le signal $HE_1$ précédant celle avec le signal $HE_5$, comme montré aux deux dernières lignes de la Fig. 11, permet de synchroniser tout bit lu avec un signal $HE_{m'}$ appartenant au second ensemble.

Dans la première ligne de la Fig. 12 est illustré un bit de largeur TBE reçu correspondant à un signal d'horloge $HE_{m'} = HE_7$ sélectionné pendant la procédure VE' et montré à une seconde ligne de la Fig. 12. L'indice m du signal d'horloge $HE_m$ calculé lors de la procédure précédente VE était alors égal à 5, 6 ou 7. Cet exemple est associé au cas particulier où l'indice m calculé pendant une vérification VE pouvait être égal à 6 ou 7, et l'indice m' est égal à 8 ou 9, ou bien 6 ou 7, lors d'une vérification suivante VE'. Une lecture directe par le signal d'horloge $HE_5$ du bit régénéré par le signal $HE_m$ est possible pour tout signal $HE_m$ appartenant au troisième ensemble, comme montré à la dernière ligne de la Fig. 12.

Les bits lus et montrés aux troisièmes lignes des Figs. 10 à 12 sont ainsi synchronisables sur le même signal d'horloge $HE_5$ montré dans les dernières lignes de ces figures. En l'absence du circuit de régénération 5 selon l'invention, les bits reçus seraient régénérés uniquement par des signaux montrés aux secondes lignes des Figs. 10 à 12, et par suite les secteurs seraient transmis avec un décalage temporel non synchronisé avec l'horloge $H_{DE}$ utilisé dans le dispositif de démultiplexage DD.

Selon l'appartenance du signal d'horloge $HE_{m'}$ à l'un des trois ensembles définis ci-dessus, la régénération du bit reçu résulte d'un traitement approprié dans le circuit de régénération 5 afin que tous les bits reçus soient mis en phase par rapport à un même signal d'horloge $H_{DE}$, quels que soient la dérive thermique et le signal $HE_{m'}$, ce dernier étant désigné dans la suite par $HE_m$ puisque m' remplace m lors d'une procédure de vérification.

En référence à la Fig. 13, le circuit de régénération de trame retour 5 comprend un circuit d'horloges 50, sept bascules de type D 51 à 57, un multiplexeur 58 ayant quatre entrées e00, e01, e10, e11, et un circuit PROM de calcul de dérive 59.

Le circuit d'horloge 50 fournit le signal $HF_m$, $HE_m$ en fonction du débit DF, DE de chaque secteur reçu de trame TTC ainsi que les signaux d'horloge $HE_5$ et $HE_1 = HE_9$ nécessaires au traitement des bits à débit élevé. Les deux groupes de signaux d'horloge $HF_O$ à $HF_{I-1}$ et $HE_O$ à $HE_{I-1}$ sont fournis par les diviseurs de fréquence 410F et la ligne à retard 410E et sont appliqués respectivement aux entrées de deux multiplexeurs 50F et 50E. Le numéro m du signal $HF_m$, ou m du signal $HE_m$ après une synchronisation initiale, ou m du signal $HE_m$ après chaque vérification cyclique est indiqué par l'unité de gestion UG et sélectionne dans les multiplexeurs 50F et 50E les signaux $HF_m$ et $HE_m$ qui sont appliqués aux deux entrées d'un multiplexeur 501. Il est à noter qu'à ce niveau, le nombre m est compris entre O et I-1 = 7, c'est-à-dire en particulier lorsque m' est égal à -2, -1, 8 ou 9, la valeur de m correspondante appliquée aux multiplexeurs 5OF et 5OE est égale à 6, 7, 0 ou 1.

Le signal DF/DE sélectionne l'un des signaux d'horloge $HF_m$ et $HE_m$ en fonction du débit du secteur considéré afin que la sortie du multiplexeur 501 applique le signal d'horloge sélectionné à l'entrée d'horloge de la première bascule 51. Les bits de secteur de trame retour TTC sont reçus à l'entrée D de la bascule 51 qui régénère les bits en fonction du signal d'horloge respectif sélectionné.

La seconde bascule 52 est utilisée seulement pour les secteurs au débit faible DF. L'entrée D et la sortie Q de cette bascule 52 sont reliées respectivement à la sortie Q de la bascule 51 et à l'entrée e11 du multiplexeur 58. L'entrée d'horloge de la bascule 52 reçoit un signal d'horloge local $H_{DF}$ de fréquence 4,096 MHz fourni par la base de temps BT. Lorsque le circuit 59 reçoit le signal DF/DE pour débit faible, son bus de sortie à deux fils S1,S0 est à "11" et sélectionne l'entrée e11, le circuit 59 n'effectuant aucun calcul et jouant le rôle de décodeur.

Les autres bascules 53 à 57 sont utilisées pour la régénération de secteurs au débit élevé DE. Elles sont réparties en trois groupes en dépendance respectivement des trois ensembles de signaux d'horloge définis ci-dessus, c'est-à-dire de la dérive thermique représentée par le couple d'indices m' et m. Cette répartition est effectuée par le circuit 59 recevant les nombres m' et m respectivement compris entre -2 et 9, et 0 et 7, fournis par l'unité de gestion UG pour chaque secteur de débit DE. Les signaux d'horloge $HE_5$ et $HE_1 = HE_9$ sont fournis respectivement par des sixième et seconde sorties de la ligne à retard 410E dans le circuit de balayage d'horloges 50 (Fig. 9E). Le signal $HE_1$ est appliqué à l'entrée d'horloge de la bascule 55. Le signal $HE_5$ est appliqué aux entrées d'horloge des bascules 53, 54, 56 et 57.

Les bascules 53 et 54 sont reliées en série entre la sortie Q de la bascule 51 et l'entrée e00 du multiplexeur 58. Elles constituent un premier groupe de bascule qui est sélectionné par [S1,S0] = "00" en sortie du circuit 59 lorsque le signal $HE_m$ est égal à l'un des signaux $HE_6 = HE_{-2}$, $HE_7 = HE_{-1}$, $HE_O$ et $HE_1$, comme montré à la Fig.10, c'est-à-dire lorsque le signal $HE_m$ appartient au premier ensemble de signaux d'horloge. En référence à la vérification VE', le circuit 59 reçoit les deux indices m et m' afin de distinguer le premier du troisième ensemble de signaux d'horloge. En effet, pour m = O ou 1, le circuit 59 produit [S1, S0] = "OO" lorsque m' = -2 ou -1, c'est-à-dire m' = 6 ou 7, et m' = 0 ou 1.

Les bascules 55 et 56 sont reliées en série entre la sortie Q de la bascule 51 et l'entrée e01 du multiplexeur 58. Elles constituent un second groupe de bascule qui est sélectionné par [S1, SO] = "O1" en sortie du circuit 59, en réponse à un indice m' égal à 2, 3, 4 ou 5, c'est-à-dire à un signal $HE_m = HE_{m'}$ égal à $HE_2$, $HE_3$, $HE_4$ ou $HE_5$ appartenant au second ensemble de signaux d'horloge.

La bascule 57 a des entrée D et sortie Q reliées respectivement à la sortie de la bascule 51 et à l'entrée e10 du multiplexeur 58. Elle constitue un troisième groupe de bascule qui est sélectionné par [S1,S0]= "10" en sortie du circuit 59 en réponse à un signal $HE_m$ égal à l'un des signaux $HE_6$, $HE_7$, $HE_O = HE_8$ et $HE_1 = HE_9$. En effet, pour m = 6 ou 7 pour une vérification VE, le circuit 59 produit [S1, S0] = "10" lorsqu'au cours d'une vérification suivante m' = 8 ou 9, c'est-à-dire m' = O ou 1, et m' = 6 ou 7.

Quelle que soit la dérive, tous les bits au débit élevé sont synchrones avec le même signal d'horloge $HE_5$ appliqué aux bascules 54, 56 et 57, et ont ainsi subi par les diverses dérives thermiques et à travers les bascules le même retard par rapport au signal $HE_m$.

La sortie du multiplexeur 58 est reliée à une entrée de données D d'une bascule 581 dont l'entrée d'horloge reçoit le signal d'horloge local $H_{DE} = HE_O$ fourni par la base de temps. Les secteurs aux débits différents DF et DE sont ainsi synchronisés par une même horloge en une trame retour regénérée appliquée au circuit de démultiplexage DD à travers le circuit de contrôle de qualité 17.

Ainsi, globalement, le circuit de regénération 5 reçoit une trame multihorloge et multiphase et regénère une trame à horloge unique.

Il est à noter que le calcul de retard $RE_k$ dans le circuit PROM 441E (Fig. 9E) et une nouvelle programmation du retard dans la station terminale correspondante $2_k$ peuvent être accomplis pour synchroniser à nouveau complètement la station terminale lorsque la différence (m' - m) est supérieure à deux lors d'une vérification de synchronisation.

Bien que l'invention ait été décrite en référence à un réseau de communication à l'alternat à support de transmission unique, le procédé de synchronisation est également applicable lorsque la transmission entre la station centrale et les stations terminales est simultanément bidirectionnelle (mode duplex), par exemple à travers des câbles coaxiaux et des modems. Dans ce cas, la durée d'une trame DT est pratiquement égale à la durée d'une période de trame PT.

## Revendications

1. Procédé pour synchroniser des stations terminales ($2_1$ - $2_k$) situées à distances différentes d'une station centrale (1) et reliées à celle-ci à travers un support de transmission arborescent (SUT) afin que des secteurs de données (S1 - SN) émis par les stations terminales à des instants différents ne se chevauchent pas et soient multiplexés temporellement en une trame retour (TTC) en réception à la station centrale,
   procédé comprenant
   - l'émission par la station centrale d'une trame aller (TCT) incluant un ordre d'émission (OC) de mot de synchronisation (MSTF) destiné à une station terminale ($2_k$) à synchroniser associé à un débit prédéterminé (DF),
   - le déclenchement d'un comptage d'impulsions périodiques dans la station centrale (1) lors de l'émission de la trame aller (TCT),
   - la transmission d'un mot de synchronisation (MSTF) par la station terminale ($2_k$) vers la station centrale en réponse à la fin de réception de la trame aller (TCT),

- l'arrêt du comptage d'impulsions en réponse à la détection du mot de synchronisation (MSTF) dans la station centrale afin d'établir un compte d'impulsions ($CF_k$),
- le calcul d'un retard ($RF_k$) en fonction du compte d'impulsions ($CF_k$), et
- la transmission dudit retard de la station centrale à la station terminale pour que ladite station terminale émette un secteur de données dans un intervalle de temps assigné de la trame retour (TTC),

caractérisé en ce qu'il comprend préalablement dans la station centrale (1), la détermination d'un signal d'horloge milieu ($HF_m$) en fonction de mots de synchronisation (MSTF) successivement transmis par la station terminale à synchroniser ($2_k$) et détectés par la station centrale, ledit signal d'horloge milieu étant déterminé à une fraction TB/I du temps bit TB des mots de synchronisation près, où I dénote un entier,

ladite détermination de signal d'horloge milieu comportant I sous-étapes (SE=1 à SE=I), une sous-étape d'indice i variant de 0 à I-1 comprenant :

- l'émission d'une trame aller (TCT) incluant ledit ordre d'émission (OC) de mot de synchronisation (MSTF) par ladite station centrale (1),
- la transmission du mot de synchronisation (MSTF) par ladite station terminale ($2_k$) en réponse à la fin de la réception de la trame aller,
- la détection du mot de synchronisation transmis (MSTF) dans la station centrale (1) au moyen d'un signal d'horloge ($HF_i$) ayant un déphasage i.TB/I par rapport à un signal d'horloge de référence ($HF_O$) et ayant le débit (DF) de ladite station terminale, et
- la comparaison du mot de synchronisation détecté avec un mot de synchronisation mémorisé (421F) dans la station centrale, et la mémorisation dudit indice i en réponse à une égalité des mots comparés,

et à la suite des I sous-étapes, un calcul de l'indice m en fonction sensiblement du milieu des indices des signaux d'horloge ($HF_O$ à $HF_{I-1}$) ayant causé des égalités de mots de manière à déterminer le signal d'horloge milieu ($HF_m$) ,

ledit comptage d'impulsions étant effectué par rapport aux impulsions dudit signal d'horloge milieu ($HF_m$), et ladite détection dudit mot de synchronisation arrêtant le comptage étant effectuée en synchronisme avec ledit signal d'horloge milieu.

2. Procédé conforme à la revendication 1, caractérisé en que tout secteur de données (Sn) émis par la station terminale ($2_k$) est reçu dans la station centrale (1) par rapport au signal d'horloge milieu respectif ($HF_m$) et est regénéré par rapport à un signal d'horloge de référence prédéterminé ($H_{DE}$) qui est utilisé pour une régénération de tous les secteurs de données (S1-SN) dans les trames retour (TTC) émises par les stations terminales ($2_1$-$2_K$).

3. Procédé conforme à la revendication 1 ou 2, caractérisé en ce qu'il comprend une vérification cyclique de la synchronisation d'une station terminale ($2_k$), une vérification (VE') consistant à déterminer un second signal d'horloge milieu ($HE_{m'}$), à évaluer le décalage (m'-m) entre un premier signal d'horloge milieu ($HE_m$) déterminé lors d'une vérification précédente et le second signal d'horloge milieu ($HE_{m'}$), à recevoir dans la station centrale (1) tout secteur de données (Sn) émis par la station terminale ($2_k$) par rapport au second signal d'horloge milieu ($HE_{m'}$), et à régénérer les bits du secteur de données reçu en fonction du décalage évalué et par rapport à un signal d'horloge de référence prédéterminé ($HE_5$ ou $H_{DE}$) qui est utilisé pour une régénération de tous les secteurs de données (S1 - SN) dans une trame retour (TTC) émis par les stations terminales.

4. Procédé conforme à la revendication 3, caractérisé en ce que, lorsque l'entier I est égal à 8, chaque signal d'horloge milieu est sélectionné parmi douze signaux d'horloge de référence déphasés successivement de TB/8 et associés à des indices respectifs -2, -1, O à 7, 8 et 9, et des bits d'un secteur de données reçu par la station centrale par rapport au signal d'horloge milieu d'indice m' sont régénérés selon l'un des cas suivants :

a) lorsque l'indice m' est compris entre -2 et 1, les bits reçus sont lus successivement par le signal d'horloge milieu d'indice m', puis deux fois par le signal d'horloge d'indice 5, l'indice m' égal à -2 ou -1 étant remplacé par 6 ou 7, respectivement;

b) lorsque l'indice m' est compris entre 2 et 5, les bits reçus sont successivement lus par le signal d'horloge milieu d'indice m' et par les signaux d'horloge d'indices 9 et 5, le signal d'horloge d'indice 9 étant identique au signal d'horloge d'indice 1; et

c) lorsque l'indice m' est compris entre 6 et 9, les bits reçus sont successivement lus par le signal d'horloge d'indice m' et par le signal d'horloge d'indice 5, l'indice m' égal à 8 ou 9 étant remplacé par l'indice 0 ou 1 respectivement.

5. Procédé de synchronisation conforme à l'une quelconque des revendications 1 à 4, caractérisé en ce que les stations terminales reçoivent et émettent des secteurs de données respectifs (S1-SN) qui sont multiplexés dans des trames multidébit et qui ont des débits en ligne différents (DF, DE), les mots de synchronisations (MSTF, MSTE) occupant une durée prédéterminée mais étant aux débits en ligne respectifs associés aux stations terminales, et les signaux d'horloge (HF, HE) servant à la synchronisation d'une station terminale étant au débit en ligne respectif de la station terminale.

6. Dispositif de synchronisation pour station terminale ($2_k$) ayant un débit donné (DF), inclus dans la station centrale (1), pour la mise en oeuvre du procédé conforme à l'une quelconque des revendications 1 à 5, caractérisé en ce qu'il comprend
   - des moyens (41F) pour produire au moins I signaux d'horloge ($HF_O$ à $HF_{I-1}$) audit débit prédéterminé (DF) de la station terminale ($2_k$) et déphasés entre eux de TB/I respectivement pendant I périodes de trame successives (PT), où TB est le temps bit des bits émis par la station terminale et I un nombre entier,
   - des moyens de comparaison (42F) pour détecter des mots de synchronisation (MSTF) émis par la station terminale par rapport aux I signaux d'horloge ($HF_O$ à $HF_{I-1}$) pendant les I périodes de trame respectivement,
   - des moyens (430F) pour mémoriser les indices des signaux d'horloge ayant causé une égalité de mots dans les moyens de comparaison,
   - des moyens (431F) pour calculer un indice en fonction des indices mémorisés afin de produire un signal d'horloge milieu ($HF_m$) correspondant audit indice calculé et destiné à la régénération de bits émis par la station terminale après la synchronisation,
   - des moyens (440F) pour compter des impulsions du signal d'horloge milieu ($HF_m$) entre l'émission d'une trame aller (TCT) par la station centrale et la détection d'un mot de synchronisation (MSTF) par rapport audit signal d'horloge milieu pendant une période de trame succédant aux I périodes de trame afin d'établir un compte d'impulsions ($CF_k$), et
   - des moyens (441F) pour calculer ledit retard ($RF_k$) en fonction du compte d'impulsions ($CF_k$).

7. Dispositif conforme à la revendication 6, caractérisé en ce qu'il comprend des moyens (50-51) pour recevoir tout bit de secteur de données émis par la station terminale ($2_k$) au rythme dudit signal d'horloge milieu ($HF_m$), et des moyens (52-59) pour régénérer chaque bit reçu par la station centrale (1) par rapport à un même signal d'horloge de référence ($HE_5$ ou $H_{DE}$) quelle que soit la station terminale.

8. Dispositif conforme à la revendication 7, caractérisé en ce que les moyens pour régénérer (52-59) comprennent des moyens (53-57) pour compenser cycliquement une variation du temps de propagation ($t_k$) entre la station terminale ($2_k$) et la station centrale (1) se traduisant par un décalage ($m'- m$) des bits reçus à la station centrale par rapport au signal d'horloge milieu ($HF_m$).

## Patentansprüche

1. Verfahren zur Synchronisierung von Endstationen ($2_1 - 2_k$), die in unterschiedlichen Entfernungen zu einer Zentralstation (1) angeordnet und mit dieser über ein Baumnetzwerk (SUT) verbunden sind, damit sich Datenausschnitte (S1 - SN), die von den Endstationen zu unterschiedlichen Zeitpunkten abgegeben werden, nicht überlappen und zeitlich in einem Rücksenderaster (TTC) beim Empfang in der Zentralstation gemultiplext werden, wobei das Verfahren die Schritte umfaßt:
   - Aussenden eines Senderasters (TCT) durch die Zentralstation, das eine Aussendeordnung (OC) eines Synchronisierwortes (MSTF) beinhaltet, das für eine zu synchronisierende Endstation ($2_k$) mit einer vorgegebenen Übertragungsrate (DF) bestimmt ist,
   - die Auslösung eines Zählens von periodischen Impulsen in der Zentralstation (1) während des Aussendens des Senderasters (TCT),
   - die Übertragung eines Synchronisierwortes (MSTF) durch die Endstation ($2_k$) zur Zentralstation als Antwort auf das Ende des Empfangs des Senderasters (TCT),
   - das Anhalten des Zählens von Impulsen als Antwort auf das Entdecken des Synchronisierwortes (MSTF) in der Zentralstation zur Erzeugung einer Impulszahl ($CF_k$),
   - das Berechnen einer Verzögerung ($RF_k$) als Funktion der Impulszahl ($CF_k$), und
   - die Übertragung dieser Verzögerung der Zentralstation zur Endstation, damit diese Endstation einen Datenausschnitt in einem dem Rücksenderaster (TTC) zugeordneten Zeitintervall aussendet,

dadurch gekennzeichnet, daß in der Zentralstation (1) zuvor die Bestimmung eines mittleren Zeit-

signals (HF_m) als Funktion der Synchronisierworte (MSTF), die nacheinander durch die zu synchronisierende Endstation ($2_k$) übertragen und von der Zentralstation entdeckt werden, erfolgt, wobei dieses mittlere Zeitsignal als ein Bruchteil TB/I des Zeitbits TB der Synchronisationsworte erfolgt, wobei I eine ganze Zahl ist, und wobei die Bestimmung des mittleren Zeitsignals I Unterabschnitte (SE=1 bis SE=I) und einen Unterabschnitt mit Index i, der zwischen 0 und I-1 variiert, aufweist und folgendes umfaßt:

- das Aussenden eines Senderasters (TCT) mit der Aussendeordnung (OC) des Synchronisierwortes (MSTF) durch die Zentralstation (1),
- die Übertragung des Synchronisierwortes (MSTF) durch die Endstation ($2_k$) als Antwort auf das Empfangsende des Senderasters,
- die Entdeckung des übertragenen Synchronisierwortes (MSTF) in der Zentralstation (1) mit Hilfe eines Zeitsignals (HF_i) mit einer Phasenverschiebung i.TB/I gegenüber einem Referenzzeitsignal (HF_0) und mit der Übertragungsrate (DF) der Endstation, und
- Vergleich des entdeckten Synchronisierwortes mit einem gespeicherten Synchronisierwort (421F) in der Zentralstation und das Abspeichern des Index i als Antwort auf eine Übereinstimmung der verglichenen Worte,

und nach den I Unterabschnitten eine Berechnung des Index m als Funktion der Mitte der Indizes der Zeitsignale (HF_0 bis $HF_{I-1}$), die durch die Gleichheit der Worte verursacht worden ist, um auf diese Weise das mittlere Zeitsignal (HF_m) zu bestimmen,

wobei dieses Zählen der Impulse in Bezug auf die Impulse dieses mittleren Zeitsignals (HF_m) durchgeführt wird und diese Entdeckung des Synchronisierwortes, die das Zählen anhält, synchron zu diesem mittleren Zeitsignal durchgeführt wird.

2. Verfahren nach Anspruch 1, dadurch gekennzeichnet, daß alle Datenausschnitte (Sn), die von der Endstation ($2_k$) ausgesendet werden, in der Zentralstation (1) mit Bezug auf das mittlere Zeitsignal (HF_m) empfangen und mit Bezug auf ein vorgegebenes Referenzzeitsignal (H_DE), das für eine Regeneration aller Datenausschnitte (S1 - SN) in den Rücksenderastern (TTC), die von den Endstationen ($2_1$ - $2_K$) ausgesendet werden, wieder hergestellt werden.

3. Verfahren nach Anspruch 1 oder 2, dadurch gekennzeichnet, daß es eine zyklische Verifikation der Synchronisierung einer Endstation ($2_k$) beinhaltet, eine Verifikation (VE'), die darin besteht, ein zweites mittleres Zeitsignal (HE_m') zu bestimmen, die Verschiebung (m'-m) zwischen einem ersten mittleren Zeitsignal (HE_m), das während einer vorangegangenen Verifikation bestimmt wurde, und dem zweiten mittleren Zeitsignal (HE_m') zu berechnen, in der Zentralstation (1) alle Datenausschnitte (Sn) zu empfangen, die von der Endstation ($2_k$) mit Bezug auf das zweite mittlere Zeitsignal (HE_m') ausgesendet werden, und die Bits des empfangenen Datenausschnitts zu regenerieren als Funktion der berechneten Verschiebung und mit Bezug auf ein vorgegebenes Referenzzeitsignal (HE_5 oder H_DE), das für die Regeneration aller Datenausschnitte (S1 - SN) in einem Rücksenderaster (TTC), das von den Endstationen ausgesendet wird, eingesetzt wird.

4. Verfahren nach Anspruch 3, dadurch gekennzeichnet, daß, wenn die ganze Zahl I gleich 8 ist, jedes mittlere Zeitsignal unter 12 jeweils um TB/8 phasenverschobenen und mit den Indizes -2, -1, 0 und 7, 8 und 9 versehenen Referenzzeitsignalen ausgewählt wird, und die Bits eines von der Zentralstation empfangenen Datenausschnittes mit Bezug auf das mittlere Zeitsignal mit dem Index m' nach einem der folgenden Fälle regeneriert werden:

a) wenn der Index m' zwischen -1 und +1 liegt, werden die empfangenen Bits nacheinander durch das mittlere Zeitsignal mit dem Index m' gelesen, dann zweimal durch das Zeitsignal mit dem Index 5, wobei der Index m' gleich -2 oder -1 durch 6 oder 7 ersetzt wird;

b) wenn der Index m' zwischen 2 und 5 liegt, werden die empfangenen Bits nacheinander durch das mittlere Zeitsignal mit dem Index m' und die Zeitsignale mit den Indizes 9 und 5 gelesen, wobei das Zeitsignal mit dem Index 9 identisch zum Zeitsignal mit dem Index 1 ist; und

c) wenn der Index m' zwischen 6 und 9 liegt, werden die empfangenen Bits durch das Zeitsignal mit dem Index m' und durch das Zeitsignal mit dem Index 5 gelesen, wobei der Index m' gleich 8 oder 9 durch den Index 0 oder 1 ersetzt wird.

5. Synchronisierverfahren nach einem der Ansprüche 1 bis 4, dadurch gekennzeichnet, daß die Endstationen jeweils Datenausschnitte (S1 - SN) empfangen und aussenden, die in den Rastern mit mehreren Übertragungsraten gemultiplext werden und die verschiedene Leitungsübertragungsraten (DF, DE) aufweisen, wobei die Synchronisierungsworte (MSTF, MSTE) eine vorgegebene Zeitdauer besetzen, aber über entsprechende Leitungsübertragungsraten mit den Endstationen verknüpft sind, und wobei die Zeitsignale (HF, HE) der Synchronisierung einer Endstation mit der Leitungsübertragungsrate der Endstation dienen.

6. Synchronisiervorrichtung für eine Endstation ($2_k$) mit einer Datenrate (DF), die in der Zentralstation (1) angeordnet ist, zur Durchführung des Verfahrens nach einem der Ansprüche 1 bis 5, dadurch gekennzeichnet, daß sie Einrichtungen (41F) zur Erzeugung von mindestens I Zeitsignalen ($HF_0$ bis $HF_{I-1}$) mit der vorgegebenen Übertragungsrate (DF) der Endstation ($2_k$), die untereinander um TB/I während I aufeinanderfolgender Rasterperioden (PT) phasenverschoben sind, wobei TB das Zeitbit der von der Endstation ausgesandten Bits und I eine ganze Zahl sind,
    - Vergleichseinrichtungen (42F) zur Erkennung der Synchronisierungsworte (MSTF), die von der Endstation bezüglich der I-Zeitsignale ($HF_0$ bis $HF_{I-1}$) während der I Rasterperioden ausgesendet werden,
    - Einrichtungen (430F) zum Speichern der Indizes der Zeitsignale, die von einer Gleichheit der Worte in den Vergleichseinrichtungen verursacht sind,
    - Einrichtungen (431F) zur Berechnung eines Index als Funktion der gespeicherten Indizes, um ein mittleres Zeitsignal ($HF_m$) zu erzeugen, das dem berechneten Index entspricht und zur Wiederherstellung der von der Endstation nach der Synchronisierung ausgesendeten Bits bestimmt ist,
    - Einrichtungen (440F) zum Zählen der Impulse des mittleren Zeitsignals ($HF_m$) zwischen der Emission eines Senderasters (TCT) durch die Zentralstation und der Entdeckung eines Synchronisierungswortes (MSTF) mit Bezug auf das mittlere Zeitsignal während einer Rasterperiode, die auf I Rasterperioden folgt, um eine Impulszahl ($CF_k$) zu erzeugen, und
    - Einrichtungen (441F) zur Berechnung der Verzögerung ($RF_k$) als Funktion der Impulszahl ($CF_k$)
  aufweist.

7. Vorrichtung nach Anspruch 6, dadurch gekennzeichnet, daß sie Einrichtungen (50 - 51) zum Empfang aller Bits des von der Endstation ($2_k$) ausgesendeten Datenausschnittes im Rhythmus des mittleren Zeitsignals (HFm) und Einrichtungen (52 - 59) zur Wiederherstellung jedes von der Zentralstation (1) empfangenen Bits mit Bezug auf ein gleiches Referenzzeitsignal ($HE_5$ oder $H_{DE}$) wie das der Endstation aufweist.

8. Vorrichtung nach Anspruch 7, dadurch gekennzeichnet, daß die Einrichtungen zur Wiederherstellung (52 - 59) Einrichtungen (53 - 57) zum zyklischen Kompensieren einer Veränderung der Ausbreitungszeit ($t_k$) zwischen der Endstation ($2_k$) und der Zentralstation (1), die sich durch eine Verschiebung (m' - m) der von der Zentralstation empfangenen Bits bezüglich dem mittleren Zeitsignal ($HF_m$) ausdrückt, aufweisen.

## Claims

1. Method for synchronizing terminal stations ($2_1$ - $2_K$) located at different distances from a central station (1) and linked through a tree-structured transmission medium (SUT) so that data sectors (S1 - SN) emitted by the terminal stations at different times do not overlap and are time-multiplexed in a backward frame (TTC) on receiving in the central station,
    method comprising
    - the emission from the central station of a forward frame (TCT) including a synchronization word (MSTF) emission order (OC) intended for a terminal station ($2_k$) to be synchronized associated to a Predetermined rate (DF),
    - the triggering of a Periodical pulse counting in the central station (1) when emitting the forward frame (TCT),
    - the transmission of a synchronization word (MSTF) by the terminal station ($2_k$) towards the central station in response to the reception end of the forward frame (TCT),
    - the halting of pulse counting in response to the detection of the synchronization word (MSTF) in the central station so as to derive a pulse count ($CF_k$),
    - the computing of a delay ($RF_k$) as a function of a pulse count ($CF_k$), and
    - the transmission of said delay from the central station to the terminal station so that said terminal station emits a data sector in an assigned time interval of the backward frame (TTC),
    characterized in that it comprises previously in the central station (1), the determination of a central clock signal ($HF_m$) as a function of synchronization words (MSTF) successively transmitted by the terminal station to be synchronized ($2_k$) and detected by the central station, said central clock signal being determined to the nearest fraction TB/I of bit time TB of the synchronization words, where I denotes an integer,
    said central clock signal determination comprising I sub-steps (SE = 1 to SE = I), a sub-step of index i varying from 0 to I-1 comprising:

- the emission of a forward frame (TCT) including said synchronization word (MSTF) emission order (OC) from said central station (1),
- the transmission of the synchronization word (MSTF) from said terminal station $(2_k)$ in response to the reception end of the forward frame,
- the detection of the transmitted synchronization word (MSTF) in the central station (1) by means of a clock signal $(HF_i)$ having a phase-shift i.TB/I in relation to a reference clock signal $(HF_O)$ and having the rate (DF) of said terminal station, and
- the comparison of the detected synchronization word with a synchronization word stored (421F) in the central station, and the storing of said index i in response to an equality of the compared words,

and subsequently to the I sub-steps, a computing of index m as a function of substantially the center of the indices of clock signals ($HF_O$ to $HF_{I-1}$) having caused equalities of words, thereby determining the central clock signal $(HF_m)$,

- said pulse counting being accomplished in relation to the pulses of said central clock signal $(HF_m)$, and said synchronization word detection stopping the counting being accomplished in synchronism with said central clock signal.

2. Method according to claim 1, characterized in that, any data sector (Sn) emitted from the terminal station $(2_k)$ is received in the central station (1) in relation to the respective central clock signal $(HF_m)$ and is regenerated in relation to a predetermined reference clock signal $(H_{DE})$ which is used for a regeneration of all data sectors (S1 - SN) in the backward frames (TTC) emitted from the terminal stations $(2_1-2_k)$.

3. Method according to claim 1 or 2, characterized in that it comprises a cyclic check of the synchronization of the terminal station $(2_k)$, a check (VE') consisting in determining a second central clock signal $(HE_{m'})$, in evaluating the shift (m'-m) between a first central clock signal $(HE_m)$ determined during a previous check and the second central clock signal $(HE_{m'})$, in receiving in the central station (1) any data sector $(S_n)$ emitted from the terminal station $(2_k)$ in relation to the second central clock signal $(HE_{m'})$, and in regenerating the bits of the received data sector as a function of a evaluated shift and in relation to a predetermined reference clock signal ($HE_5$ or $H_{DE}$) which is used for a regeneration of all the data sectors (S1 - SN) in a backward frame (TTC) emitted from the terminal stations.

4. Method according to claim 3, characterized in that when the integer I is equal to 8, each central clock signal is selected amongst twelve reference clock signals phase-shifted successively by TB/8 and associated to respective indices -2, -1, 0 to 7 , 8 and 9, and bits of a data sector received by the central station in relation to the central clock signal of index m' are regenerated according to one of the following cases:

a) when the index m' lies between -2 and 1, the received bits are read successively by the central clock signal of index m', then twice by the clock signal of index 5, the index m' equal to -2 or -1 being replaced by 6 and 7, respectively;

b) when the index m' lies between 2 and 5, the received bits are successively read by the central clock signal of index m' and by clock signals of indices 9 and 5, the clock signal of index 9 being identical to clock signal of index 1; and

c) when the index m' lies between 6 and 9, the received bits are successively read by the clock signal of index m' and by the clock signal of index 5, the index m' equal to 8 or 9 being replaced by index 0 or 1 respectively.

5. Synchronization method according to any one of claims 1 to 4, characterized in that the terminal stations receive and emit respective data sectors (S1 - SN) which are multiplexed in multirate frames and which have different on-line rates (DF, DE), the synchronization words (MSTF, MSTE) occupying a predetermined time but being at respective on-line rates associated with the terminal stations, and the clock signals (HF, HE) used for the synchronization of a terminal station being at the respective on-line rates of the terminal station.

6. Synchronization device for terminal station $(2_k)$ having a given rate (DF), included in the central station (1) for the implementation of the device according to any one of claims 1 to 5, characterized in that it comprises :

- means (41F) for producing at least I clock signals ($HF_O$ to $HF_{I-1}$) at said predetermined rate (DF) of the terminal station $(2_k)$ and phase-shifted therebetween by TB/I respectively during I successive frame periods (PT), where TB is the bit time of the bits emitted from the terminal station and I is an integer,
- comparison means (42F) for detecting synchronization words (MSTF) emitted from the terminal station in relation to I clock signals ($HF_O$ to $HF_{I-1}$) during I frame periods, respectively,

- means (430F) for storing the indices of the clock signals having caused an equality of words in the comparison means,
- means (431F) for computing an indice as a function of stored indices thereby producing a clock signal ($HF_m$) corresponding to said computed index and designed to regenerate bits emitted from the terminal station after the synchronization,
- means (440F) for counting pulses of the central clock signal ($HF_m$) between the emission of a forward frame (TCT) from the central station and the detection of a synchronization word (MSTF) in relation to said central clock signal during a frame period succeeding I frame periods thereby deriving a pulse count ($CF_k$), and
- means (441F) for computing said delay ($RF_k$) as a function of the pulse count ($CF_k$).

7. Device according to claim 6, characterized in that, it comprises means (50 - 51) for receiving all data sector bits emitted by the terminal station ($2_k$) at the rate of said central clock signal ($HF_m$), and means (52 - 59) for regenerating each bit received by the central station (1) in relation to a same reference clock signal ($HE_5$ or $H_{DE}$) whatever the terminal station.

8. Device according to claim 7, characterized in that the regenerating means (52, 59) comprise means (53 - 57) for cyclically compensating a variation in the propagation time ($t_k$) between the terminal station ($2_k$) and the central station (1) expressed by a shift ($m' - m$) of the bits received in the central station in relation to the central clock signal ($HF_m$).

*FIG.1*

RESEAU
TELEPHONIQUE

STATION
CENTRALE
(FIG.8)

TCT

FO

TTC

$3_1$

$L_1$

$2_1 (t_1)$

STATION
TERMINALE

$2_2$

STATION
TERMINALE

$2_k (t_k)$

STATION
TERMINALE
(DF ou DE)

dF ou dE

$3_2$

SUT

$2_{K-1}$

STATION
TERMINALE

$3_K$

STATION
TERMINALE

$2_K (t_K)$

$L_0$

$L_K$

$t_K < t_{max}$

dF,dE

1

20

EP 0 505 281 B1

## FIG.2

$PT = 500\ \mu s$

TCT

SG(MSTF ou MSTE)  TTC

$2\ TP = 109{,}375\ \mu s$
$2TPF = 448bits$

S1

S8

DT

## FIG.3

$DT = 195{,}31\mu s$  ($DTF = 800bits$ à $4{,}096Mbit/s$)

SG

S1 | S2 | S3 | S4 | S5 | S6 | S7 | S8

$N = 8$ secteurs de canal

SG

S2

S8

$DG = DS/3 = 7{,}81\mu s$

$DS = 23{,}44\mu s$

$DS = 23{,}44\mu s$

$DF = 4{,}096Mbit/s$
$NBG = 32bits$

$DF = 4{,}096Mbit/s$
$NBF = 96bits$

$DE = 49{,}152 = 12 \times 4{,}096Mbit/s$
$NBE = 1152 = 96 \times 12bits$

$dG = 64kbit/s$
$nbG = 32\ bits$

$dF = 160kbit/s$
$nbF = 80bits$

$dE = 2{,}048Mbit/s$
$nbE = 1024\ bits$

## FIG.4

SG

| MVT | J | OC | IC | AG |

EP 0 505 281 B1

*FIG.5*

ACQUISITION DE SYNCHRONISATION
STATION TERMINALE $2_k$
$J_k$, DF (ou DE)

$HF_i = HF_0$, SE = 0, E = 0

SE > I+3  oui

non

OC= émission de MSTF

E=1  non

oui

Compteur 440E enclenché

RECEPTIONS $J_k$ DANS $2_k$  non  SE=SE+1

$HF_0$
MSTF recu=MSTF memorisé

E=1  non

oui

E=1  oui

non

i dans registres 430F

SE<I  oui  i=i+1

non

CALCUL m possible?  non

oui

ERREUR

$HF_i = HF_m$

E=1

ERREUR

Arrêt compteur 440E
CALCUL $RF_k$
DC=programmation retard
IC=$RF_k$ vers $2_k$

VERIFICATION ou FIN

22

FIG.6

FIG.7

# FIG.8
## STATION CENTRALE 1

FIG. 9F

CIRCUIT DE SYNCHRONISATION 4F POUR STATION TERMINALE A DEBIT FAIBLE DF

## FIG.9E

de UG

S/E1

CIRCUIT DE SYNCHRONISATION 4E
POUR STATION TERMINALE
A DEBIT ELEVE DE

COMPTEUR
modulo I      412E

41E

i      CCT DE
BALAYAGE
D'HORLOGES

MEMOIRE
MSTE      421E

430E

REGISTRES
DES i
POUR EGALITE

COMPARATEUR      422E

LE

LE=96

HE$_1$

HE$_0$      HE$_2$

LIGNE A
RETARD

PROM
CALCUL
m,m'

REGISTRE A
DECALAGE      420E

CCT DE
COMPARAISON
DE MOTS
DE SYNC.

413E

411E

HE$_7$      410E

42E

HE$_0$=H$_{DE}$

DE=49,152MHz

vers UG

RE$_k$      m
m'      ER

431E

441E      440E      B

REGISTRE
TAMPON

PROM
CALCUL
RE$_k$

COMPTEUR
CE$_k$
14 bits

RAZ

HE$_m$

MSTE

432E

442E

CCT D'EVALUATION
DE RETARD

443E

CCT DE SELECTION
D'HORLOGE MILIEU      43E

HE$_0$ à HE$_{I-1}$ =HE$_7$

PT

DT+2TP+ SG

46      45

44E

E
F

MSTF,
MSTE

HT de UG

DF/DE
de UG      SG de 16

EP 0 505 281 B1

26

*FIG.10*

*FIG.11*

*FIG.12*

FIG.13

5

trame recue TTC de 16

de UG

m'

m

PROM CALCUL DERIVE m'–m  59

S0

S1

e11  e00  e01  e10  58

HF$_0$ à HF$_{J-1}$ de 410F

m de UG

HE$_0$ à HE$_{J-1}$ de 410E

50

50F

50E

HF$_m$

HE$_m$

DF/DE

501

CIRCUIT D'HORLOGES

HE$_5$

HE$_1$=HE$_9$

Q D  51

Q D  52

H$_{DF}$

Q D  53

Q D  54

Q D  55

Q D  56

Q D  57

Q D  581

H$_{DE}$

secteurs de trame régénérée

vers 17

28